(19) Europäisches Patentamt
European Patent Office
Office européen des brevets

(11) **EP 4 650 335 A2**

(12) **EUROPEAN PATENT APPLICATION**

(43) Date of publication:
**19.11.2025 Bulletin 2025/47**

(21) Application number: **25196978.8**

(22) Date of filing: **10.11.2022**

(51) International Patent Classification (IPC):
**C04B 41/87** $^{(2006.01)}$

(52) Cooperative Patent Classification (CPC):
**F01N 3/0222; B01D 53/9454; B01J 23/63; B01J 35/57; B01J 37/0018; B01J 37/0215; B01J 37/0219; B01J 37/024; B01J 37/0248; F01N 3/035;** B01D 2255/102; B01D 2255/2065; B01D 2255/407; B01D 2255/908; B01D 2255/9155;
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.11.2021 US 202163282815 P**

(62) Document number(s) of the earlier application(s) in accordance with Art. 76 EPC:
**22840364.8 / 4 436 696**

(71) Applicant: **Corning Incorporated**
**Corning, New York 14831 (US)**

(72) Inventors:
• **Bayliss, Ryan David**
  **New York, 11217 (US)**
• **Deshmane, Vishwanath Ganpat**
  **New York, 14870 (US)**
• **Zhong, Danhong**
  **New York, 14830 (US)**

(74) Representative: **Sturm, Christoph**
**Patentanwälte Sturm Weilnau Franke**
**Partnerschaft mbB**
**Unter den Eichen 5 (Haus C-Süd)**
**65195 Wiesbaden (DE)**

Remarks:
This application was filed on 20-08-2025 as a divisional application to the application mentioned under INID code 62.

(54) **EMISSIONS TREATMENT ARTICLES WITH INORGANIC FILTRATION DEPOSITS AND CATALYTIC MATERIAL**

(57) A filtration article comprising: a plugged honeycomb filter body comprising: porous ceramic walls; inlet channels plugged at a distal end of the plugged honeycomb filter body; outlet channels plugged at a proximal end of the plugged honeycomb filter body; inorganic deposits disposed on walls defining the inlet channels of the plugged honeycomb filter body at a loading of less than or equal to 20 grams of the inorganic deposits per liter of the plugged honeycomb filter body; a catalytic material in pores of the porous ceramic walls and disposed separate from the inorganic deposits; and wherein at least a portion of the inorganic deposits comprise bridging inorganic deposits extending at least partially over the pores that extend to the surface of the porous ceramic walls, and a clean filtration efficiency of the filtration article is greater than or equal to 90% as measured by a clean filtration efficiency test.

FIG. 8

EP 4 650 335 A2

(52) Cooperative Patent Classification (CPC): (Cont.)
B01D 2258/014; C04B 38/0006; F01N 2330/06;
F01N 2370/02; F01N 2510/06; F01N 2510/068;
Y02T 10/12

## Description

### Cross Reference to Related Application

This application claims the benefit of priority under 35 U.S.C. §119 of U.S. Provisional Application Serial No. 63/282815 filed on November 24, 2021, the content of which is relied upon and incorporated herein by reference in its entirety.

## BACKGROUND

Field

The present specification relates to articles for emissions treatment, the articles comprising porous ceramic walls, such as plugged honeycomb filter bodies, comprising inorganic deposits disposed on walls defining inlet channels of the plugged honeycomb filter bodies and a catalytic material in pores of the porous ceramic walls, and methods of making and using such articles.

Technical Background

Wall flow filters are employed to remove particulates from fluid exhaust streams, such as from combustion engine exhaust. Examples include ceramic soot filters used to remove particulates from diesel engine exhaust gases; and gasoline particulate filters (GPF) used to remove particulates from gasoline engine exhaust gases. For wall flow filters, exhaust gas to be filtered enters inlet cells and passes through the cell walls to exit the filter via outlet channels, with the particulates being trapped on or within the inlet cell walls as the gas traverses and then exits the filter.

GPFs can be used in conjunction with gasoline direct injection (GDI) engines, which emit more particulates than conventional gasoline engines.

Three-way conversion (TWC) catalysts are used to convert combustion by-products such as carbon monoxides, nitrogen oxides, and hydrocarbons emitted from gasoline engines.

Emissions treatment articles that utilize an aftertreatment component, such as a catalytically-coated GPF, seek to provide high filtration efficiency (FE) and catalytic conversion.

## SUMMARY

Aspects of the disclosure pertain to porous bodies and methods for their manufacture and use.

According to one aspect, a filtration article comprises: a plugged honeycomb filter body comprising intersecting porous ceramic walls defining a plurality of channels comprised of inlet channels, which are plugged at a distal end of the plugged honeycomb filter body, and outlet channels, which are plugged at a proximal end of the plugged honeycomb filter body, wherein the porous ceramic walls comprise a plurality of pores, wherein some of the pores extend to surfaces of the walls which define the inlet channels; inorganic deposits disposed on surfaces of the walls which define the inlet channels of the plugged honeycomb filter body; and a catalytic material disposed inside the walls of the plugged honeycomb filter body. At least a portion of the inorganic deposits comprise bridging inorganic deposits which at least partially extend over the pores that extend to the surface of the walls, and such bridging inorganic deposits are spaced away from the catalytic material which is disposed within the walls.

According to another aspect, a filtration article comprises: a plugged honeycomb filter body comprising intersecting porous ceramic walls defining a plurality of channels comprised of inlet channels which are plugged at a distal end of the plugged honeycomb filter body and outlet channels which are plugged at a proximal end of the plugged honeycomb filter body, the porous ceramic walls having an average wall thickness, wherein the porous ceramic walls comprise a plurality of pores which comprise exposed pores and remaining pores, wherein the exposed pores extend to surfaces of the walls which define the inlet channels; inorganic deposits disposed on surfaces of the walls which define the inlet channels of the plugged honeycomb filter body, and a catalytic material disposed inside the walls of the plugged honeycomb filter body. At least a portion of the inorganic deposits comprise bridging inorganic deposits which at least partially extend over the exposed pores at the surface of the wall, and such bridging inorganic deposits are spaced away from the catalyst material which is disposed within the walls.

According to a further aspect, a filtration article comprises: a plugged honeycomb filter body comprising: porous ceramic walls; inlet channels which are plugged at a distal end of the plugged honeycomb filter body; and outlet channels which are plugged at a proximal end of the plugged honeycomb filter body; inorganic deposits disposed on walls defining the inlet channels of the plugged honeycomb filter body; and a three-way conversion (TWC) catalytic material in pores of the porous ceramic walls. At least a portion of the inorganic deposits comprise bridging inorganic deposits which at least

3

partially extend over pores that extend to the surface of the walls, and the bridging inorganic deposits are positioned on the walls to a wall depth of less than or equal to 70 micrometers.

According to an aspect, a filtration article comprises: a plugged honeycomb filter body comprising: porous ceramic walls; inlet channels which are plugged at a distal end of the plugged honeycomb filter body; and outlet channels which are plugged at a proximal end of the plugged honeycomb filter body; inorganic deposits disposed on walls defining the inlet channels of the plugged honeycomb filter body at a loading of less than or equal to 20 grams of the inorganic deposits per liter of the plugged honeycomb filter body; and a three-way conversion (TWC) catalytic material in pores of the porous ceramic walls and disposed separate from the inorganic deposits. At least a portion of the inorganic deposits comprise bridging inorganic deposits which at least partially extend over the pores that extend to the surface of the walls, and a clean filtration efficiency of the filtration article is greater than or equal to 90% as measured by a clean filtration efficiency test.

An aspect is directed to methods for making filtration articles, the method comprising: coating a catalytic material within pores of porous ceramic walls of a plugged honeycomb filter body; thereafter depositing a filler material within the plugged honeycomb filter body; exposing the plugged honeycomb filter body to a surface treatment to deposit inorganic deposits within the plugged honeycomb filter body on one or more portions of the porous ceramic walls; and burning off the filler material.

Additional features and advantages will be set forth in the detailed description, which follows, and in part will be readily apparent to those skilled in the art from that description or recognized by practicing the embodiments described herein, comprising the detailed description, which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

BRIEF DESCRIPTION OF THE DRAWINGS

FIG. 1 schematically depicts a honeycomb body according to embodiments disclosed and described herein;

FIG. 2 schematically depicts a particulate filter according to embodiments disclosed and described herein;

FIG. 3 is a cross-sectional longitudinal view of the particulate filter shown in FIG. 2;

FIG. 4 schematically depicts a wall of a honeycomb body with inorganic deposits according to embodiments disclosed and described herein;

FIG. 5 schematically depicts a cross-sectional view of a porous ceramic wall of a honeycomb body including a three-way conversion (TWC) catalytic material loaded in the pores (prior art);

FIG. 6 schematically depicts the cross-sectional view of a porous ceramic wall of a honeycomb body including a three-way conversion (TWC) catalytic material loaded in the pores of FIG. 5, and further inorganic deposits as-deposited in the absence of a sacrificial filler/barrier (soot);

FIG. 7 schematically depicts a cross-sectional view of a porous ceramic wall of a honeycomb body including a three-way conversion (TWC) catalytic material loaded in the pores and a sacrificial filler/barrier (soot) deposited thereafter in accordance with one or more embodiments herein;

FIG. 8 schematically depicts the cross-sectional view of a porous ceramic wall of a honeycomb body including a three-way conversion (TWC) catalytic material loaded in the pores and a sacrificial filler/barrier (soot) deposited thereafter of FIG. 7 and further including inorganic deposits deposited onto the walls in accordance with one or more embodiments herein;

FIG. 9 schematically depicts the cross-sectional view of a porous ceramic wall of a honeycomb body including a three-way conversion (TWC) catalytic material loaded in the pores of and inorganic deposits deposited onto the walls after removal of the sacrificial filler/barrier (soot) of FIGS. 7-8 in accordance with one or more embodiments herein;

FIG. 10 is a graph of pressure drop (kPa) versus soot loading;

FIGS. 11A and 11B are graphs of filtration efficiency (FE) versus soot loading, the x-axis ranging from 0 to 0.1 g/L soot loading for FIG. 11A, and the x-axis ranging from 0 to 0.03 g/L soot loading for FIG. 11B;

FIG. 12 is a graph of pressure drop (kPa) versus soot loading for varying loadings of inorganic particles and FE;

FIG. 13 is graph of local coating distribution (%) versus cross wall location (micrometers) for a three-way conversion (TWC) catalytic material-loaded gasoline particulate filter (GPF) at a loading of 90 g/L (1.47 g/in$^3$) and along with local porosity for a one micron slice (Vv/Vt where Vv is the volume of voids and Vt is a total volume of material in slice) of a bare GPF;

FIG. 14 is a flowchart depicting an exemplary embodiment of a process of forming deposits of inorganic material on a substrate according to embodiments disclosed herein;

FIG. 15 is a flowchart depicting an exemplary embodiment of a process of preparing an emissions treatment article according to embodiments disclosed herein;

FIGS. 16A and 16B are SEM micrographs of an emissions treatment article at differing magnitudes; and

FIG. 17 is a schematic drawing of a filtration efficiency measurement apparatus, which may also serve as a deposition apparatus for a sacrificial filler/barrier.

## DETAILED DESCRIPTION

Reference will now be made in detail to embodiments of articles for emissions treatment, for example, filtration articles, comprising a plugged honeycomb filter body comprising inorganic deposits disposed on walls defining inlet channels of the plugged honeycomb filter body and a catalytic material in pores of porous ceramic walls of the plugged honeycomb filter body, embodiments of which are illustrated in the accompanying drawings. Whenever possible, the same reference numerals will be used throughout the drawings to refer to the same or like parts.

Aspects herein relate to articles, emissions treatment articles, in particular filtration articles, which are effective for filtration of particulates from gaseous streams and/or for catalytically converting combustion by-products such as carbon monoxides, nitrogen oxides, and hydrocarbons. Aspects also relate to manufacture of such articles and their use.

Advantageously, articles disclosed herein including inorganic deposits disposed on walls defining inlet channels of a plugged honeycomb filter bodies and a catalytic material in pores of porous ceramic walls of the plugged honeycomb filter bodies provide both high filtration efficiency and emissions conversion efficiency. There is substantial separation of the inorganic deposits and the catalytic material in that there is little to no overlap of these materials in a direction of the porous ceramic walls perpendicular to the axial extrusion direction. In one or more embodiments, some of the inorganic deposits comprise bridging inorganic deposits that at least partially extend over pores which extend to the surfaces of the walls of the inlet channels, which may be referred to as "exposed" pores. In this way, a low pressure drop penalty across the filter body is realized alone and in conjunction with acceptable to improved catalytic conversion efficiency by keeping the inorganic deposits substantially separated from the catalytic material. Reference to "separation from" or "disposed separate from" and the like means that there is no intentional mixing of the catalytic material, e.g., TWC catalytic material, and the inorganic deposits, but some minor migration of these materials and intermingling of these is permissible at interfaces.

To achieve this substantial separation of the inorganic deposits and the catalytic material, the catalytic material is first coated into pores of the honeycomb filter body. Then, a filler material is deposited within the honeycomb filter body to fill any accessible empty pores. Thereafter, the inorganic deposits are deposited on walls of the honeycomb filter body. The filler material is then removed, for example, by burning it out. The result is that the pores that had contained the filter material are now voided of the filter material and the inorganic deposits are on the walls of the honeycomb filter body and some bridging inorganic deposits at least partially extend over the pores that extend to the surface of the walls, resulting in minimal penetration of the inorganic deposits into pores of the honeycomb filter body. As used herein, "filler material" is a sacrificial filler or barrier used to fill some pores of the honeycomb filter body, which is thereafter removed, e.g., burned away.

The "inorganic deposits" of the honeycomb filter body are non-engine inorganic deposits. That is, the inorganic deposits of the honeycomb filter body are not soot or metals or the like coming from the engine exhaust itself. Rather, the inorganic deposits of the honeycomb filter body are present from manufacture of the articles itself. In one or more embodiments the inorganic deposits of the honeycomb body are free from rare earth oxides such as ceria, lanthana, and yttria. In one or more embodiments, the inorganic deposits are free from catalyst, for example, an oxidation catalyst such as a platinum group metal (e.g., platinum, palladium and rhodium) or a selective catalytic reduction catalyst such as a copper, a nickel or an iron promoted molecular sieve (e.g., a zeolite).

In one or more embodiments, advantageously, the catalytic material comprises a three-way conversion (TWC) catalytic material. In one or more embodiments, the catalytic material comprises: a platinum group metal (PGM), alumina, and an oxygen storage component. In one or more embodiments, advantageously, the catalytic material comprises a selective catalytic reduction (SCR) catalyst. In one or more embodiments, the catalytic material comprises: a copper, a nickel or an iron promoted molecular sieve (e.g., a zeolite).

In embodiments, a loading of the catalytic material is between 0.5 g/in$^3$ (30 g/L) to 10 g/in$^3$ (600 g/L) within the honeycomb body, and all values and subranges therebetween, such as 0.5 g/in$^3$ (30 g/L) to 5 g/in$^3$ (300 g/L) and/or 0.5 g/in$^3$ (30 g/L) to 2.5 g/in$^3$ (150 g/L). Catalytic material within the honeycomb body refers to catalytic material disposed on walls and/or in pores of the walls. In specific embodiments, the loading of the catalytic material is in a range of from 35 to 150 g/L, 40 to 140 g/L, 50 to 130 g/L, 60 to 125 g/L, 70 to 120 g/L, 80 to 110 g/L, 90 to 100 g/L within the honeycomb body. Loading of the catalytic material is weight of added material in grams divided by the geometric part volume in liters. The geometric part volume is based on outer dimensions of the honeycomb filter body (or plugged honeycomb body).

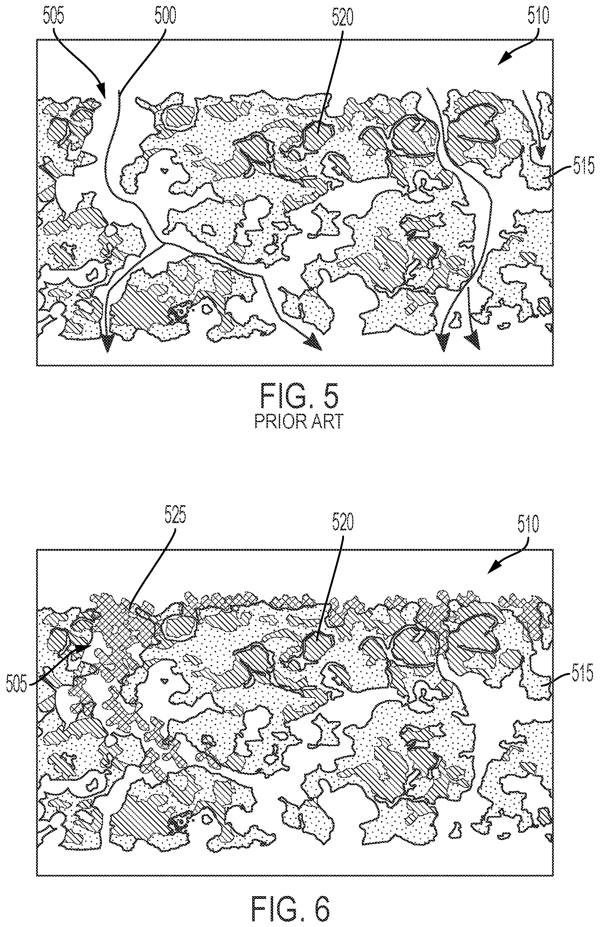

FIG. 5 schematically depicts a traditional (prior art) TWC catalytic material-coated gasoline particulate filter (GPF). In FIG. 5, provided is a cross-sectional view of a porous ceramic wall 510 of a honeycomb body made of ceramic material 515, including a three-way conversion (TWC) catalytic material 520 loaded in the pores 505. A portion of the pores 505 in the ceramic material 515 was blocked by the TWC catalytic material 520, which typically results in flow being concentrated in a small portion of large pores with high velocity. Gaseous flow 500 travels in the direction of the arrows, which is exemplified for the large pores.

FIG. 6 schematically depicts the cross-sectional view of a porous ceramic wall of a honeycomb body including a three-way conversion (TWC) catalytic material loaded in the pores of FIG. 5, and further inorganic deposits as-deposited in the absence of a sacrificial filler/barrier (soot). In FIG. 6, the porous ceramic wall 510 of the honeycomb body made of the ceramic material 515 includes the three-way conversion (TWC) catalytic material 320 loaded in the pores 505, and inorganic deposits 525. In the absence of a sacrificial/barrier material during loading, the inorganic deposits 525 are typically deposited in a small portion of large pores, and penetrate deep inside the porous ceramic wall 510.

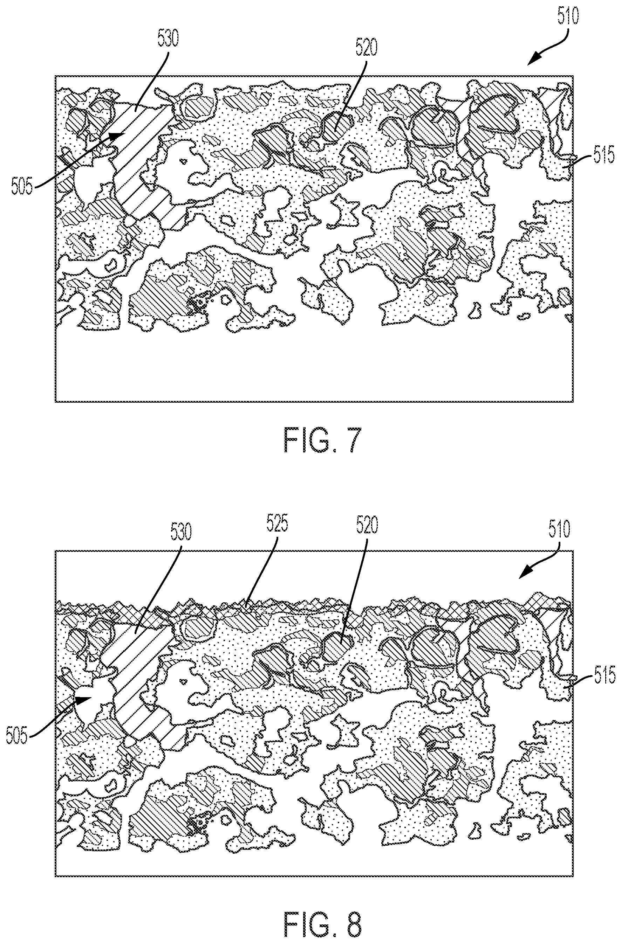

FIG. 7 schematically depicts a cross-sectional view of a porous ceramic wall of a honeycomb body including a three-way conversion (TWC) catalytic material loaded in the pores and a sacrificial filler/barrier (soot) deposited thereafter in accordance with one or more embodiments herein. In FIG. 7, the porous ceramic wall 510 of the honeycomb body made of the ceramic material 515 includes the three-way conversion (TWC) catalytic material 520 loaded in the pores 505, and a sacrificial filler/barrier 530, e.g. a plurality of soot particles, is deposited in pores accessible to the surface, e.g., large pores or exposed pores. When the flow carries soot particles 530 for deposition, the soot particles 530 will also be deposited in these exposed pores.

FIG. 8 schematically depicts the cross-sectional view of a porous ceramic wall of a honeycomb body including a three-way conversion (TWC) catalytic material loaded in the pores and a sacrificial filler/barrier (soot) deposited thereafter of FIG. 7 and further including inorganic deposits deposited onto the walls in accordance with one or more embodiments herein. In FIG. 8, the inorganic deposits 525 are deposited on the porous ceramic wall 510 of the honeycomb body made of the ceramic material 515. The three-way conversion (TWC) catalytic material 520 remains loaded in the pores 505 and disposed separate from the inorganic deposits 525 due to the sacrificial filler/barrier 530, e.g. a plurality of soot particles. Since the exposed pores have been blocked by soot, the inorganic deposits 525 will be deposited on top of the wall of ceramic material 525 forming bridging inorganic deposits, which in one or more embodiments may be a substantially uniform layer.

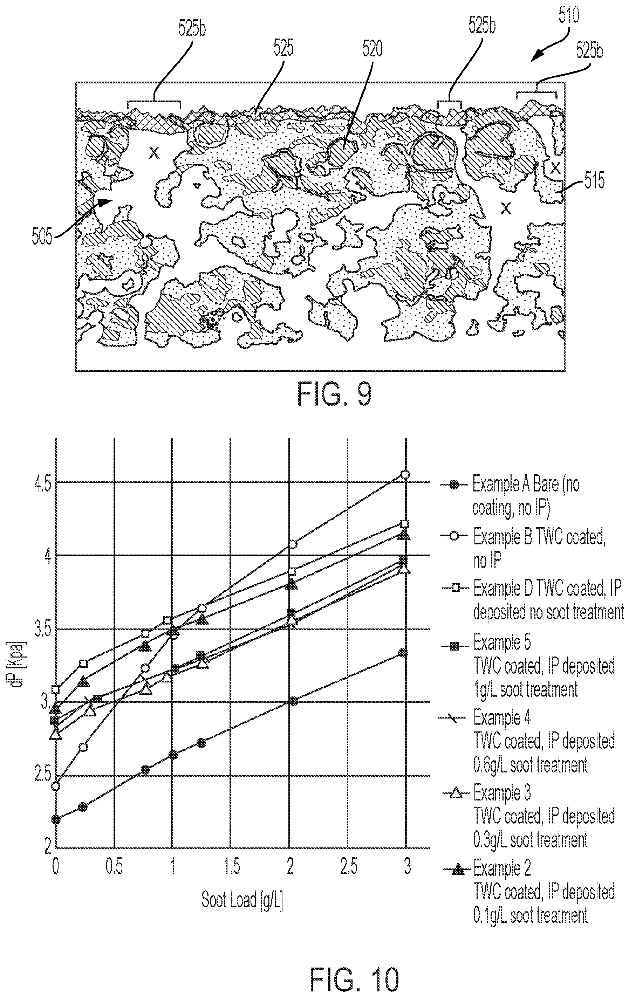

FIG. 9 schematically depicts the cross-sectional view of a porous ceramic wall of a honeycomb body including a three-way conversion (TWC) catalytic material loaded in the pores of and inorganic deposits deposited onto the walls after removal of the sacrificial filler/barrier (soot) of FIGS. 7-8 in accordance with one or more embodiments herein. After soot is burned out, the original pores are free of material, generating a more permeable wall with a layer in accordance with one or more embodiments of inorganic material on top. In FIG. 9, the inorganic deposits 525 are deposited on the porous ceramic wall 510 of the honeycomb body made of the ceramic material 515, and the three-way conversion (TWC) catalytic material 520 in the pores 505 is disposed separate or substantially separate from the inorganic deposits 525. In one or more embodiments, the three-way conversion (TWC) catalytic material and the inorganic deposits are spaced apart. Exemplary exposed pores "X" are shown and exemplary bridging inorganic deposits 525b extend over the pores that extend to the surface of the walls, e.g., the "X" pores. There can be some penetration of the inorganic particles, e.g. to a "wall depth" as measured from a surface of the wall on the inlet side of the channels.

According to one aspect, at least a portion of inorganic deposits comprise bridging inorganic deposits, which at least partially extend over the pores that extend to the surface of the walls, and such bridging inorganic deposits are spaced away from the catalytic material which is disposed within the walls. In one or more embodiments, the bridging inorganic deposits extend over a majority of the pores that extend to the surface of the walls. In one or more embodiments, the bridging inorganic deposits extend over all of the pores that extend to the surface of the walls. In one or more embodiments, some of the inorganic deposits contact the catalytic material which is disposed in the walls.

According to another aspect, porous ceramic walls comprise a plurality of pores which comprise exposed pores and remaining pores, and the exposed pores extend to surfaces of the walls which define inlet channels. At least a portion of the inorganic deposits comprise bridging inorganic deposits which at least partially extend over the exposed pores at the surface of the wall, and such bridging inorganic deposits are spaced away from the catalyst material which is disposed within the walls. In one or more embodiments, the bridging inorganic deposits extend over a majority of the exposed pores at the surface of the walls. In one or more embodiments, the bridging inorganic deposits extend over all of the exposed pores at the surface of the walls. In one or more embodiments, some of the inorganic deposits contact the catalytic material which is disposed in the remaining pores at the surface of the walls.

According to a further aspect, at least a portion of the inorganic deposits comprise bridging inorganic deposits which at least partially extend over pores that extend to the surface of the walls, and the bridging inorganic deposits are positioned on the walls to a wall depth of less than or equal to 70 micrometers. In one or more embodiments, the bridging inorganic deposits are positioned on the walls to a wall depth of less than or equal to 40 micrometers. In one or more embodiments, the bridging inorganic deposits are spaced away from the TWC catalytic material which is in the pores of the walls.

According to an aspect, at least a portion of the inorganic deposits comprise bridging inorganic deposits which at least partially extend over the pores that extend to the surface of the walls, and a clean filtration efficiency of the filtration article is greater than or equal to 90% as measured by a clean filtration efficiency test.

The porous ceramic walls having an average wall thickness. In one or more embodiments, some of the inorganic deposits penetrate into the walls to a penetration depth of less than 1/10 of an average thickness of the wall. In one or more embodiments, some of the inorganic deposits penetrate into the walls to a penetration depth of 1/1000 to 1/10 of an average thickness of the wall.

In embodiments, the inorganic deposits comprise one or more inorganic materials, such as one or more ceramic or refractory materials. In embodiments, the inorganic deposits is disposed on the walls to provide enhanced filtration efficiency, both locally through and at the wall and globally through the honeycomb body, at least in the initial use of the honeycomb body as a filter following a clean state, or regenerated state, of the honeycomb body, for example such as before a substantial accumulation of ash and/or soot occurs inside the honeycomb body after extended use of the honeycomb body as a filter.

In embodiments, the inorganic deposits form a filtration material.

In one aspect, the filtration material is present as a layer disposed on the surface of one or more of the walls of the honeycomb structure. The layer in embodiments is porous to allow the gas flow through the wall. In embodiments, the layer is present as a continuous coating over at least part of the, or over the entire, surface of the one or more walls. In embodiments of this aspect, the filtration material is flame-deposited filtration material.

In another aspect, the filtration material is present as a plurality of discrete regions of filtration material disposed on the surface of one or more of the walls of the honeycomb structure. The filtration material may partially block a portion of some of the pores of the porous walls, while still allowing gas flow through the wall. In embodiments of this aspect, the filtration material is aerosol-deposited filtration material. In some preferred embodiments, the filtration material comprises a plurality of inorganic particle agglomerates, wherein the agglomerates are comprised of inorganic or ceramic or refractory material. In embodiments, the agglomerates are porous, thereby allowing gas to flow through the agglomerates.

In embodiments, a honeycomb body comprises a porous ceramic honeycomb body comprising a first end, a second end, and a plurality of walls having wall surfaces defining a plurality of inner channels. A deposited material such as a filtration material, such as inorganic deposits, which may be a porous inorganic layer, is disposed on one or more of the wall surfaces of the honeycomb body. The inorganic deposits, which may be a continuous porous inorganic layer, has a porosity in a range of from about 20% to about 95%, or from about 25% to about 95%, or from about 30% to about 95%, or from about 40% to about 95%, or from about 45% to about 95%, or from about 50% to about 95%, or from about 55% to about 95%, or from about 60% to about 95%, or from about 65% to about 95%, or from about 70% to about 95%, or from about 75% to about 95%, or from about 80% to about 95%, or from about 85% to about 95%, from about 30% to about 95%, or from about 40% to about 95%, or from about 45% to about 95%, or from about 50% to about 95%, or from about 55% to about 95%, or from about 60% to about 95%, or from about 65% to about 95%, or from about 70% to about 95%, or from about 75% to about 95%, or from about 80% to about 95%, or from about 85% to about 95%, or from about 20% to about 90%, or from about 25% to about 90%, or from about 30% to about 90%, or from about 40% to about 90%, or from about 45% to about 90%, or from about 50% to about 90%, or from about 55% to about 90%, or from about 60% to about 90%, or from about 65% to about 90%, or from about 70% to about 90%, or from about 75% to about 90%, or from about 80% to about 90%, or from about 85% to about 90%, or from about 20% to about 85%, or from about 25% to about 85%, or from about 30% to about 85%, or from about 40% to about 85%, or from about 45% to about 85%, or from about 50% to about 85%, or from about 55% to about 85%, or from about 60% to about 85%, or from about 65% to about 85%, or from about 70% to about 85%, or from about 75% to about 85%, or from about 80% to about 85%, or from about 20% to about 80%, or from about 25% to about 80%, or from about 30% to about 80%, or from about 40% to about 80%, or from about 45% to about 80%, or from about 50% to about 80%, or from about 55% to about 80%, or from about 60% to about 80%, or from about 65% to about 80%, or from about 70% to about 80%, or from about 75% to about 80%, and a continuous layer of the inorganic deposits has an average thickness of greater than or equal to 0.5 $\mu$m and less than or equal to 50 $\mu$m, or greater than or equal to 0.5 $\mu$m and less than or equal to 45 $\mu$m, greater than or equal to 0.5 $\mu$m and less than or equal to 40 $\mu$m, or greater than or equal to 0.5 $\mu$m and less than or equal to 35 $\mu$m, or greater than or equal to 0.5 $\mu$m and less than or equal to 30 $\mu$m, greater than or equal to 0.5 $\mu$m and less than or equal to 25 $\mu$m, or greater than or equal to 0.5 $\mu$m and less than or equal to 20 $\mu$m, or greater than or equal to 0.5 $\mu$m and less than or equal to 15 $\mu$m, greater than or equal to 0.5 $\mu$m and less than or equal to 10 $\mu$m. Average thickness may be determined by an overall average thickness (all channels in the honeycomb body) along entire axial length from inlet to outlet. Various embodiments of honeycomb bodies and methods for forming such honeycomb bodies will be described herein with specific reference to the appended drawings.

The material in embodiments comprises a filtration material, and in embodiments comprises an inorganic layer. According to one or more embodiments, the inorganic layer provided herein comprises a discontinuous layer formed from the inlet end to the outlet end comprising discrete and disconnected patches of material or filtration material and binder comprised of primary particles in secondary aggregate particles or agglomerates that are substantially spherical. In one or more embodiments, the primary particles are non-spherical. In one or more embodiments, "substantially spherical" refers to an agglomerate having a circularity in cross section in a range of from about 0.8 to about 1 or from about 0.9 to about 1, with 1 representing a perfect circle. In one or more embodiments, 75% of the primary particles deposited on the honeycomb body have a circularity of less than 0.8. In one or more embodiments, the aggregate particles or agglomerates deposited on the honeycomb body have an average circularity greater than 0.9, greater than 0.95, greater than 0.96, greater than 0.97, greater than 0.98, or greater than 0.99.

Circularity can be measured using a scanning electron microscope (SEM). The term "circularity of the cross-section (or simply circularity)" is a value expressed using the equation shown below. A circle having a circularity of 1 is a perfect circle. Circularity=$(4\pi\times$cross-sectional area)/(length of circumference of the cross-section)$^2$.

In one or more embodiments, the "filtration material" provides enhanced filtration efficiency to the honeycomb body, both locally through and at the wall and globally through the honeycomb body. In one or more embodiments, "filtration material" is not considered to be catalytically active in that it does not react with components of a gaseous mixture of an exhaust stream.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

As used herein, "have", "having", "include", "including", "comprise", "comprising" or the like are used in their open ended sense, and generally mean "including, but not limited to".

A honeycomb body, as referred to herein, is a shaped ceramic honeycomb structure of intersecting walls to form cells the define channels. The ceramic honeycomb structure may be formed, extruded, or molded, and may be of any shape or size. For example, a ceramic honeycomb structure may be a filter body formed from cordierite or other suitable ceramic material.

A honeycomb body, as referred to herein, may also be defined as a shaped ceramic honeycomb structure having at least one layer applied to wall surfaces of the honeycomb structure, configured to filter particulate matter from a gas stream. There may be more than one layer applied to the same location of the honeycomb structure. The layer may comprise inorganic material, organic material or both inorganic material and organic material. For example, a honeycomb body may, in one or more embodiments, be formed from cordierite or other ceramic material and have a porous inorganic layer applied to surfaces of the cordierite honeycomb structure.

A honeycomb body of one or more embodiments may comprise a honeycomb structure and deposited material such as a filtration material, which may be a porous inorganic layer disposed on one or more walls of the honeycomb structure. In embodiments, the deposited material such as a filtration material, which may be a porous inorganic layer is applied to surfaces of walls present within honeycomb structure, where the walls have surfaces that define a plurality of inner channels.

The inner channels, when present, may have various cross-sectional shapes, such as circles, ovals, triangles, squares, pentagons, hexagons, or tessellated combinations or any of these, for example, and may be arranged in any suitable geometric configuration. The inner channels, when present, may be discrete or intersecting and may extend through the honeycomb body from a first end thereof to a second end thereof, which is opposite the first end.

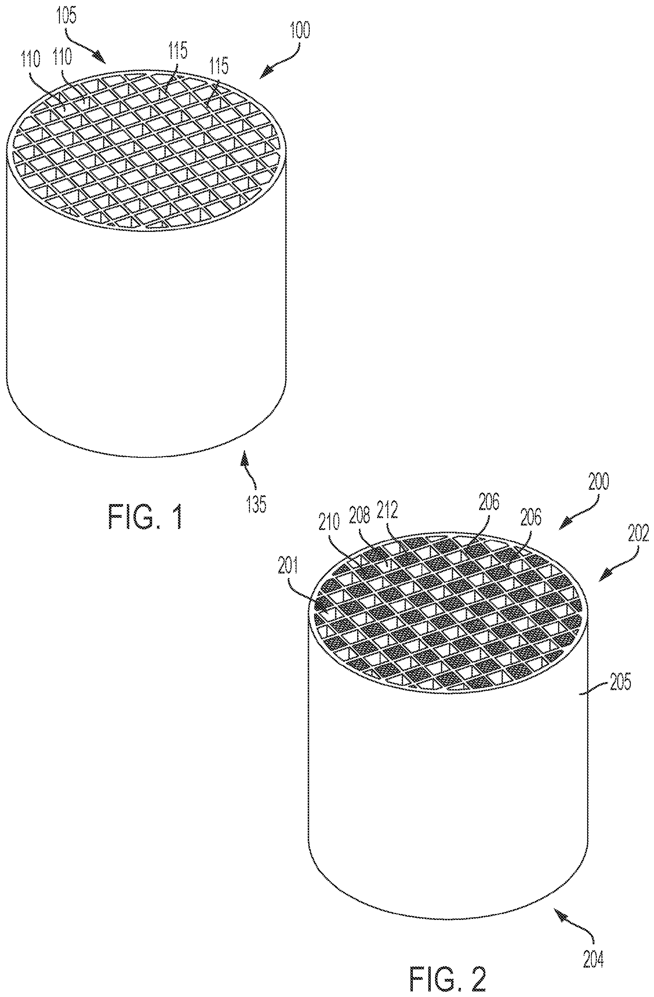

With reference now to FIG. 1, a honeycomb body **100** according to one or more embodiments shown and described herein is depicted. The honeycomb body **100** may, in embodiments, comprise a plurality of walls **115** defining a plurality of inner channels **110.** The plurality of inner channels **110** and intersecting channel walls **115** extend between first end **105,** which may be an inlet end, and second end **135,** which may be an outlet end, of the honeycomb body.

In one or more embodiments, the honeycomb body may be formed from cordierite, aluminum titanate, enstatite, mullite, forsterite, corundum (SiC), spinel, sapphirine, and periclase. In general, cordierite is a solid solution having a composition according to the formula $(Mg,Fe)_2Al_3(Si_5AlO_{18})$. In embodiments, the pore size of the ceramic material may be controlled, the porosity of the ceramic material may be controlled, and the pore size distribution of the ceramic material may be controlled, for example by varying the particle sizes of the ceramic raw materials. In addition, pore formers may be included in ceramic batches used to form the honeycomb body.

In embodiments, walls of the honeycomb body may have an average thickness from greater than or equal to 25 $\mu$m to less than or equal to 250 $\mu$m, such as from greater than or equal to 45 $\mu$m to less than or equal to 230 $\mu$m, greater than or equal to 65 $\mu$m to less than or equal to 210 $\mu$m, greater than or equal to 65 $\mu$m to less than or equal to 190 $\mu$m, or greater than or equal to 85 $\mu$m to less than or equal to 170 $\mu$m. The walls of the honeycomb body can be described to have a base portion comprised of a bulk portion (also referred to herein as the bulk), and surface portions (also referred to herein as the surface). The surface portion of the walls extends from a surface of a wall of the honeycomb body into the wall toward the bulk portion of the honeycomb body. The surface portion may extend from 0 (zero) to a depth of about 10 $\mu$m into the base portion of the wall of the honeycomb body. In embodiments, the surface portion may extend about 5 $\mu$m, about 7 $\mu$m, or about 9 $\mu$m (i.e., a depth of 0 (zero)) into the base portion of the wall. The bulk portion of the honeycomb body constitutes the thickness of wall minus the surface portions. Thus, the bulk portion of the honeycomb body may be determined by the following equation:

$$t_{total} - 2t_{surface}$$

where $t_{total}$ is the total thickness of the wall and $t_{surface}$ is the thickness of the wall surface.

In one or more embodiments, the bulk of the honeycomb body (prior to applying any material or filtration material or layer) has a bulk median pore size from greater than or equal to 7 $\mu$m to less than or equal to 25 $\mu$m, such as from greater than or equal to 12 $\mu$m to less than or equal to 22 $\mu$m, or from greater than or equal to 12 $\mu$m to less than or equal to 18 $\mu$m. For example, in embodiments, the bulk of the honeycomb body may have bulk median pore sizes of about 10 $\mu$m, about 11 $\mu$m, about 12 $\mu$m, about 13 $\mu$m, about 14 $\mu$m, about 15 $\mu$m, about 16 $\mu$m, about 17 $\mu$m, about 18 $\mu$m, about 19 $\mu$m, or about 20 $\mu$m. Generally, pore sizes of any given material exist in a statistical distribution. Thus, the term "median pore size" or "$d_{50}$" (prior to applying any material or filtration material or layer) refers to a length measurement, above which the pore sizes of 50% of the pores lie and below which the pore sizes of the remaining 50% of the pores lie, based on the statistical distribution of all the pores. Pores in ceramic bodies can be manufactured by at least one of: (1) inorganic batch material particle size and size distributions; (2) furnace/heat treatment firing time and temperature schedules; (3) furnace atmosphere (e.g., low or high oxygen and/or water content), as well as; (4) pore formers, such as, for example, polymers and polymer particles, starches, wood flour, hollow inorganic particles and/or graphite/carbon particles.

In specific embodiments, the median pore size ($d_{50}$) of the bulk of the honeycomb body (prior to applying any material or filtration material or layer) is in a range of from 10 $\mu$m to about 16 $\mu$m, for example 13-14 $\mu$m, and the $d_{10}$ refers to a length measurement, above which the pore sizes of 90% of the pores lie and below which the pore sizes of the remaining 10% of the pores lie, based on the statistical distribution of all the pores is about 7 $\mu$m. In specific embodiments, the $d_{90}$ refers to a length measurement, above which the pore sizes of 10% of the pores of the bulk of the honeycomb body (prior to applying any material or filtration material or layer) lie and below which the pore sizes of the remaining 90% of the pores lie, based on the statistical distribution of all the pores is about 30 $\mu$m. In specific embodiments, the median or average diameter ($D_{50}$) of the secondary aggregate particles or agglomerates is about 2 microns. In specific embodiments, it has been determined that when the agglomerate median size $D_{50}$ and the median wall pore size of the bulk honeycomb body $d_{50}$ is such that there is a ratio of agglomerate median size $D_{50}$ to median wall pore size of the bulk honeycomb body $d_{50}$ is in a range of from 5:1 to 16:1, excellent filtration efficiency results and low pressure drop results are achieved. In more specific embodiments, a ratio of agglomerate median size $D_{50}$ to median wall pore size of the bulk of honeycomb body $d_{50}$ (prior to applying any material or filtration material or layer) is in a range of from 6:1 to 16:1, 7:1 to 16:1, 8:1 to 16:1, 9:1 to 16:1, 10:1 to 16:1, 11:1 to 16:1 or 12:1 to 6:1 provide excellent filtration efficiency results and low pressure drop results.

In embodiments, the bulk of the honeycomb body may have bulk porosities, not counting a coating, of from greater than or equal to 50% to less than or equal to 75% as measured by mercury intrusion porosimetry. Other methods for measuring porosity include scanning electron microscopy (SEM) and X-ray tomography, these two methods in particular are valuable for measuring surface porosity and bulk porosity independent from one another. In one or more embodiments, the bulk porosity of the honeycomb body may be in a range of from about 50% to about 75%, in a range of from about 50% to about 70%, in a range of from about 50% to about 65%, in a range of from about 50% to about 60%, in a range of from about 50% to about 58%, in a range of from about 50% to about 56%, or in a range of from about 50% to about 54%, for example.

In one or more embodiments, the surface portion of the honeycomb body has a surface median pore size from greater than or equal to 7 $\mu$m to less than or equal to 20 $\mu$m, such as from greater than or equal to 8 $\mu$m to less than or equal to 15 $\mu$m, or from greater than or equal to 10 $\mu$m to less than or equal to 14 $\mu$m. For example, in embodiments, the surface of the honeycomb body may have surface median pore sizes of about 8 $\mu$m, about 9 $\mu$m, about 10 $\mu$m, about 11 $\mu$m, about 12 $\mu$m, about 13 $\mu$m, about 14 $\mu$m, or about 15 $\mu$m.

In embodiments, the surface of the honeycomb body may have surface porosities, prior to application of a layer, of from greater than or equal to 35% to less than or equal to 75% as measured by mercury intrusion porosimetry, SEM, or X-ray tomography. In one or more embodiments, the surface porosity of the honeycomb body may be less than 65%, such as less than 60%, less than 55%, less than 50%, less than 48%, less than 46%, less than 44%, less than 42%, less than 40%, less than 48%, or less than 36% for example.

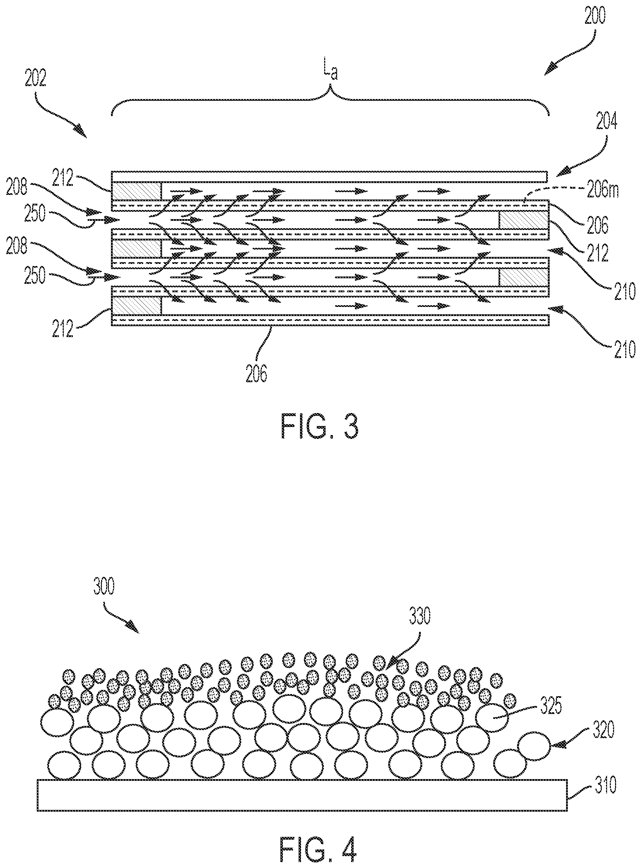

Referring now to FIGS. 2-3, a honeycomb body in the form of a particulate filter 200 is schematically depicted. The particulate filter 200 may be used as a wall-flow filter to filter particulate matter from an exhaust gas stream 250, such as an exhaust gas stream emitted from a gasoline engine, in which case the particulate filter 200 is a gasoline particulate filter. The particulate filter 200 generally comprises a honeycomb body having a plurality of channels 201 or cells which extend between an inlet end 202 and an outlet end 204, defining an overall length $L_a$ (shown in FIG. 3). The channels 201 of the particulate filter 200 are formed by, and at least partially defined by a plurality of intersecting channel walls 206 that extend from the inlet end 202 to the outlet end 204. The particulate filter 200 may also include a skin layer 205 surrounding the plurality of channels 201. This skin layer 205 may be extruded during the formation of the channel walls 206 or formed in later processing as an after-applied skin layer, such as by applying a skinning cement to the outer peripheral portion of the channels.

A cross-sectional longitudinal view of the particulate filter **200** of FIG. 2 is shown in FIG. 3. In embodiments, certain channels are designated as inlet channels **208** and certain other channels are designated as outlet channels **210.** In embodiments of the particulate filter **200,** at least a first set of channels may be plugged with plugs **212.** Generally, the plugs **212** are arranged proximate the ends (i.e., the inlet end or the outlet end) of the channels **201.** The plugs are generally arranged in a pre-defined pattern, such as in the checkerboard pattern shown in FIG. 2, with every other channel being plugged at an end. The inlet channels **208** may be plugged at or near the outlet end **204,** and the outlet channels **210** may be plugged at or near the inlet end **202** on channels not corresponding to the inlet channels, as depicted in FIG. 3. Accordingly, each cell may be plugged at or near one end of the particulate filter only. The intersecting channel walls **206** are porous such that the gas stream **250** flows through a thickness of the walls, as well as in an axial direction, and overall in a direction of the arrows, from inlet channels **208** to the outlet channels **210.** The porous ceramic walls have an average wall thickness. A midpoint **206m** is one-half of the average wall thickness.

While FIG. 2 generally depicts a checkerboard plugging pattern, it should be understood that alternative plugging patterns may be used in the porous ceramic honeycomb article. In the embodiments described herein, the particulate filter **200** may be formed with a channel density of up to about 600 channels per square inch (cpsi). For example, in embodiments, the particulate filter 100 may have a channel density in a range from about 100 cpsi to about 600 cpsi. In some other embodiments, the particulate filter 100 may have a channel density in a range from about 100 cpsi to about 400 cpsi or even from about 200 cpsi to about 300 cpsi.

In the embodiments described herein, the channel walls **206** of the particulate filter 200 may have a thickness of greater than about 4 mils (101.6 microns). For example, in embodiments, the thickness of the channel walls 206 may be in a range from about 4 mils up to about 30 mils (762 microns). In some other embodiments, the thickness of the channel walls 206 may be in a range from about 7 mils (177.8 microns) to about 20 mils (508 microns).

In embodiments of the particulate filter **200** described herein the channel walls **206** of the particulate filter **200** may have a bare open porosity (i.e., the porosity before any coating is applied to the honeycomb body) % P$\geq$35% prior to the application of any coating to the particulate filter **200.** In embodiments the bare open porosity of the channel walls 206 may be such that 40%$\leq$% P$\leq$75%. In other embodiments, the bare open porosity of the channel walls **206** may be such that 45%$\leq$% P$\leq$75%, 50%$\leq$% P$\leq$75%, 55%$\leq$% P$\leq$75%, 60%$\leq$% P$\leq$75%, 45%$\leq$% P$\leq$70%, 50%$\leq$% P$\leq$70%, 55%$\leq$% P$\leq$70%, or 60%$\leq$% P$\leq$70%.

Further, in embodiments, the channel walls **206** of the particulate filter 200 are formed such that the pore distribution in the channel walls **206** has a median pore size of $\leq$30 microns prior to the application of any coatings (i.e., bare). For example, in embodiments, the median pore size may be $\geq$8 microns and less than or $\leq$30 microns. In other embodiments, the median pore size may be $\geq$10 microns and less than or $\leq$30 microns. In other embodiments, the median pore size may be $\geq$10 microns and less than or $\leq$25 microns. In embodiments, particulate filters produced with a median pore size greater than about 30 microns have reduced filtration efficiency while with particulate filters produced with a median pore size less than about 8 microns may be difficult to infiltrate the pores with a washcoat containing a catalyst. Accordingly, in embodiments, it is desirable to maintain the median pore size of the channel wall in a range of from about 8 microns to about 30 microns, for example, in a range of rom 10 microns to about 20 microns.

In one or more embodiments described herein, the honeycomb body of the particulate filter **200** is formed from a metal or ceramic material such as, for example, cordierite, silicon carbide, aluminum oxide, aluminum titanate or any other ceramic material suitable for use in elevated temperature particulate filtration applications. For example, the particulate filter **200** may be formed from cordierite by mixing a batch of ceramic precursor materials which may include constituent materials suitable for producing a ceramic article which predominately comprises a cordierite crystalline phase. In general, the constituent materials suitable for cordierite formation include a combination of inorganic components including talc, a silica-forming source, and an alumina-forming source. The batch composition may additionally comprise clay, such as, for example, kaolin clay. The cordierite precursor batch composition may also contain organic components, such as organic pore formers, which are added to the batch mixture to achieve the desired pore size distribution. For example, the batch composition may comprise a starch which is suitable for use as a pore former and/or other processing aids. Alternatively, the constituent materials may comprise one or more cordierite powders suitable for forming a sintered cordierite honeycomb structure upon firing as well as an organic pore former material.

The batch composition may additionally comprise one or more processing aids such as, for example, a binder and a liquid vehicle, such as water or a suitable solvent. The processing aids are added to the batch mixture to plasticize the batch mixture and to generally improve processing, reduce the drying time, reduce cracking upon firing, and/or aid in producing the desired properties in the honeycomb body. For example, the binder can include an organic binder. Suitable organic binders include water soluble cellulose ether binders such as methylcellulose, hydroxypropyl methylcellulose, methylcellulose derivatives, hydroxyethyl acrylate, polyvinylalcohol, and/or any combinations thereof. Incorporation of the organic binder into the plasticized batch composition allows the plasticized batch composition to be readily extruded. In embodiments, the batch composition may include one or more optional forming or processing aids such as, for example, a lubricant which assists in the extrusion of the plasticized batch mixture. Exemplary lubricants can include tall oil, sodium stearate or other suitable lubricants.

After the batch of ceramic precursor materials is mixed with the appropriate processing aids, the batch of ceramic precursor materials is extruded and dried to form a green honeycomb body comprising an inlet end and an outlet end with a plurality of channel walls extending between the inlet end and the outlet end. Thereafter, the green honeycomb body is fired according to a firing schedule suitable for producing a fired honeycomb body. At least a first set of the channels of the fired honeycomb body are then plugged in a predefined plugging pattern with a ceramic plugging composition and the fired honeycomb body is again fired to ceram the plugs and secure the plugs in the channels.

In various embodiments the honeycomb body is configured to filter particulate matter from a gas stream, for example, an exhaust gas stream from a gasoline engine. Accordingly, the median pore size, porosity, geometry and other design aspects of both the bulk and the surface of the honeycomb body are selected taking into account these filtration requirements of the honeycomb body. As an example, and as shown in the embodiment of FIG. 4, a wall **310** of the honeycomb body **300,** which can be in the form of the particulate filter as shown in FIGS. 2 and 3, has layer **320** disposed thereon, which in embodiments is sintered or otherwise bonded by heat treatment. The layer **320** may comprise particles **325** that are deposited on the wall **310** of the honeycomb body **300** and help prevent particulate matter from exiting the honeycomb body along with the gas stream **330,** such as, for example, soot and ash, and to help prevent the particulate matter from clogging the base portion of the walls **310** of the honeycomb body **300.** In this way, and according to embodiments, the layer **320** can serve as the primary filtration component while the base portion of the honeycomb body can be configured to otherwise minimize pressure drop for example as compared to conventional honeycomb bodies without such layer. As will be described in further detail herein, the layer may be formed by a suitable method, such as, for example, an aerosol deposition method. Aerosol deposition enables the formation of a thin, porous layer at least some surfaces of the walls of the honeycomb body. An advantage of the aerosol deposition method according to one or more embodiments is that honeycomb bodies can be produced more economically than in other techniques such as flame deposition processes. According to one or more embodiments, the aerosol deposition processes produce a unique primary particle morphology.

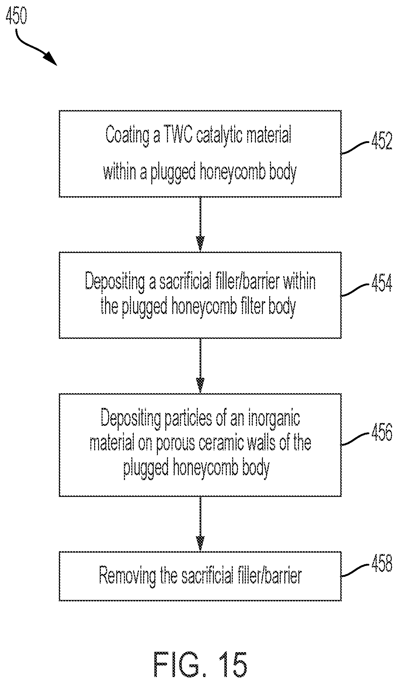

Generally, with respect to FIG. 15, a method **450** for preparing emissions treatment articles herein, including filtration articles having catalytic material, comprises the following operations. At operation **452,** a TWC catalytic material is coated within a plugged honeycomb body. At operation **454,** a sacrificial filler/barrier is deposited within the plugged honeycomb filter body. In one or more embodiments, the sacrificial filler/barrier is an organic material, natural or synthetic, selected from the group consisting of: soot, starch, and polymer powders. In one or more embodiments, a loading of the filler material within the plugged honeycomb filter body is in a range of greater than or equal to 0.1 g/L (6 g/ in$^3$) to less than or equal to 0.3 g/L (18 g/ in$^3$), and all values and subranges therebetween, of the plugged honeycomb filter body. Loading of the sacrificial filler/barrier is weight of added material in grams divided by the geometric part volume in liters. The geometric part volume is based on outer dimensions of the honeycomb filter body (or plugged honeycomb body).

At operation **456,** of an inorganic material are deposited on one or more portions of porous ceramic walls of the plugged honeycomb body. At operation **458,** the sacrificial filler/barrier is removed. The sacrificial filler/barrier may be removed by heat treatment. In one or more embodiments, the filler material is burned off at a temperature in a range of greater than or equal to 600°C to less than or equal to 1200°C, and all values and subranges therebetween. In one or more embodiments, the plugged honeycomb body includes a plurality of channels comprised of inlet channels which are plugged at a distal end of the plugged honeycomb filter body and outlet channels which are plugged at a proximal end of the plugged honeycomb filter body.

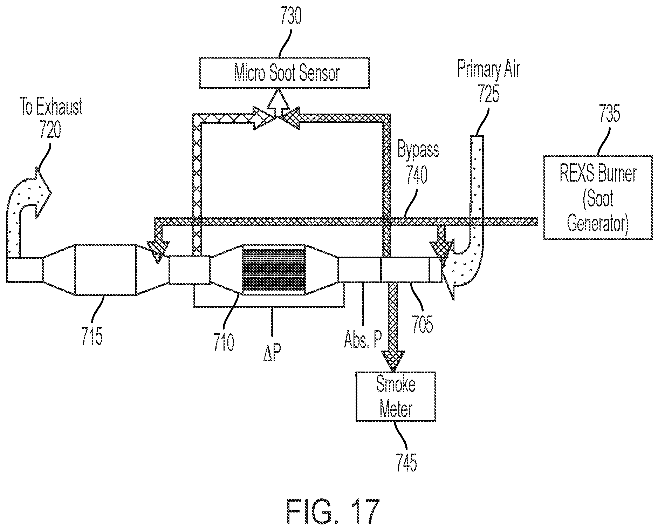

In one or more embodiments, deposition of the sacrificial filler/barrier within the honeycomb filter body is conducted in an apparatus that has a deposition chamber for housing the honeycomb body during deposition, inlet sources of filler/barrier material, (e.g., soot), and carrier gas (e.g., air) and an exhaust outlet. An exemplary deposition apparatus is shown and described for FIG. 17, which is also suitable for measuring filtration efficiency. Pressure sensors are located an upstream position and a downstream position of the deposition chamber. Similarly, a particle sensor, e.g., a micro-soot sensor, is installed to monitor particle or soot concentration at an upstream position and a downstream position of the deposition chamber. Temperature sensors may also be installed at an upstream position and a downstream position of the deposition chamber. Soot is generated to simulate gasoline engine particulates in terms of soot morphology, chemistry and size distribution. An exemplary soot generator is a propane burner (Reproducible Exhaust Simulator (REXS burner), Matter Engineering Inc. In use, soot mobility mode diameter is set at one of: 65/85/110 nm, with a lognormal geometric standard deviation of 1.8 and primary particle diameter of 20-35 nm. Combined flow rate of soot and carrier gas over time yields a desired loading, which may be apparatus-specific. Upon soot-loading to a desired amount, the soot-loaded plugged honeycomb filter body is moved to an apparatus for inorganic particle deposition, as discussed herein. For removal of the sacrificial filler/barrier layer, the soot-and inorganic particle-loaded plugged honeycomb filter body is exposed to a temperature in a range of greater than or equal to 600°C to less than or equal to 1200°C, and all values and subranges therebetween. Upon removal of the sacrificial filter/barrier layer, the final emissions treatment article is obtained.

In various embodiments, the inorganic material in the form of deposits is effective to filter particulate matter from a gas stream, for example, an exhaust gas stream from a gasoline engine. Accordingly, the median pore size, porosity, geometry and other design aspects of both the bulk and the surface of the honeycomb body are selected taking into account these filtration requirements of the honeycomb body. Particles of the inorganic material that are deposited on the wall of the honeycomb body and help prevent particulate matter, such as, for example, soot and ash, from exiting the honeycomb body and to help prevent the particulate matter from clogging the base portion of the walls of the honeycomb body. In this way, and according to embodiments, the inorganic deposits can serve as a primary filtration component while the porous ceramic walls of the honeycomb body can be configured to otherwise minimize pressure drop for example as compared to conventional honeycomb bodies without such layer. As will be described in further detail herein, the layer may be formed by a suitable method, such as, for example, an aerosol deposition method. Aerosol deposition enables the formation of a thin, porous layer at least some surfaces of the walls of the honeycomb body.

According to one or more embodiments, a process is provided which includes forming an aerosol with a binder process, which is deposited on a honeycomb body to provide a high filtration efficiency material, which may be an inorganic layer, on the honeycomb body to provide a gasoline particulate filter. According to one or more embodiments, the process can include the steps of mixture preparation, atomization, drying, and deposition of material on the walls of a wall flow filter and curing. Deposits of inorganic deposits having a high mechanical integrity can be formed without any sintering steps (e.g., heating to temperatures in excess of 1000 °C) by aerosol deposition with binder.

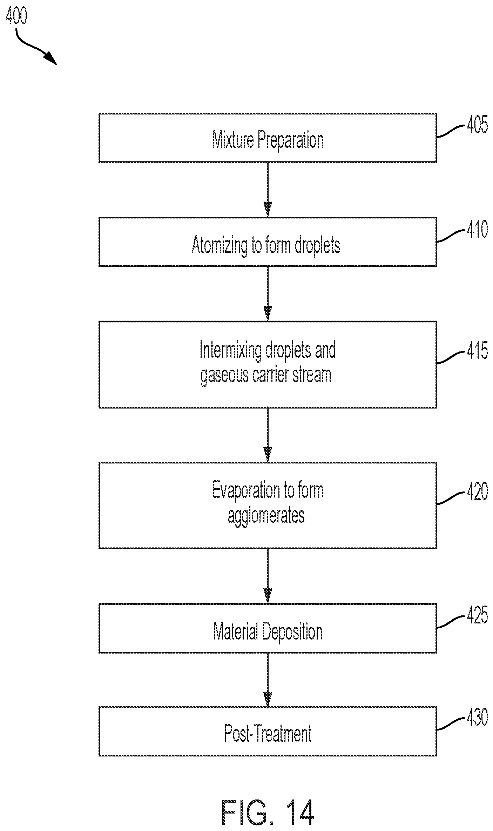

According to one or more embodiments, an exemplary process flow **400** according to FIG. 14 for coating particles of an inorganic material on one or more portions of porous ceramic walls of a honeycomb body according to FIG. 15 at operation **456** includes: mixture preparation **405,** atomizing to form droplets **410,** intermixing droplets and a gaseous carrier stream **415;** evaporating liquid vehicle to form agglomerates **420,** depositing of material, e.g., agglomerates, on the walls of a wall-flow filter **425,** and optional post-treatment **430** to, for example, bind the material on, or in, or both on and in, the porous walls of the honeycomb body. Aerosol deposition methods form of agglomerates comprising a binder can provide a high mechanical integrity even without any high temperature curing steps (e.g., heating to temperatures in excess of 1000°C), and in embodiments even higher mechanical integrity after a curing step such as a high temperature (e.g., heating to temperatures in excess of 1000°C) curing step.

**Mixture preparation 405.** Commercially available inorganic particles can be used as a raw material in a mixture for depositing. According to one or more embodiments, the particles are selected from $Al_2O_3$, $SiO_2$, $TiO_2$, $CeO_2$, $ZrO_2$, SiC, MgO and combinations thereof. In one or more embodiments, the mixture is a suspension. The particles may be supplied as a raw material suspended in a liquid vehicle to which a further liquid vehicle is optionally added.

In embodiments, the suspension is aqueous-based, and in other embodiments, the suspension is organic-based, for example, an alcohol such as ethanol or methanol.

The solution is formed using a solvent which is added to dilute the suspension if needed. Decreasing the solids content in the solution could reduce the aggregate size proportionally if the droplet generated by atomizing has similar size. The solvent should be miscible with suspension mentioned above, and be a solvent for binder and other ingredients.

A binder is optionally added to reinforce the material, which comprise inorganic binder, to provide mechanical integrity to deposited material. The binder provides binding strength between particles at elevated temperature (>500° C). The starting material can be organic. After exposure to high temperature in excess of about 150 °C, the organic will decompose or react with moisture and oxygen in the air. Suitable binders include but are not limited to alkoxy-siloxane resins. In one or more embodiments, the alkoxy-siloxane resins are reactive during processing. An exemplary reactive alkoxy-siloxane resin (methoxy functional) prior to processing has a specific gravity of 1.1 at 25°C. Another exemplary reactive alkoxy-siloxane resin (methyl-methoxy functional) prior to processing has a specific gravity of 1.155 at 25°C.

Catalyst can be added to accelerate the cure reaction of binder. A catalyst that can be used to accelerate the cure reaction of reactive alkoxy-siloxane resins is titanium butoxide.

**Atomizing to form droplets 410.** The mixture is atomized into fine droplets by high pressure gas through a nozzle. One example of the nozzle is 1/4J-SS+SU11-SS from Spraying Systems Co. This setup is comprised of a nozzle body along with fluid cap 2050 and air cap 67147. The atomizing gas can contribute to breaking up the liquid-particulate-binder stream into the droplets. The pressure of the atomizing gas is in the range of 20 psi to 150 psi. The pressure of the liquid is in the range of 1 to 100 psi. The average droplet size according to one or more embodiments is in the range of from 1 micron to 40 microns, for example, in a range of from 5 microns to 10 microns. The droplet size can be adjusted by adjusting the surface tension of the solution, viscosity of the solution, density of the solution, gas flow rate, gas pressure, liquid flow rate, liquid pressure, and nozzle design. In one or more embodiments, the atomizing gas comprises air, nitrogen or mixture thereof. In specific embodiments, the atomizing gas and the apparatus does not comprise air.

**Intermixing droplets and gaseous carrier stream 415.** The droplets are conveyed toward the honeycomb body by a gaseous carrier stream. In one or more embodiments, the gaseous carrier stream comprises a carrier gas and the atomizing gas. In one or more embodiments, at least a portion of the carrier gas contacts the atomizing nozzle. In one or more embodiments, substantially all of the liquid vehicle is evaporated from the droplets to form agglomerates comprised of the particles and the binder material.

In one or more embodiments, the gaseous carrier stream is heated prior to being mixed with the droplets. In one or more embodiments, the gaseous carrier stream is at a temperature in the range of from greater than or equal to 50°C to less than or equal to 500°C, including all greater than or equal to 80°C to less than or equal to 300°C, greater than or equal to 50°C to less than or equal to 150°C, and all values and subranges therebetween. Operationally, temperature can be chosen to at least evaporate solvent of the mixture or suspension so long as the final temperature is above the dew point. As non-limiting example, ethanol can be evaporated at a low temperature. Without being held to theory, it is believed that an advantage of a higher temperature is that the droplets evaporate faster and when the liquid is largely evaporated, they are less likely to stick when they collide. In certain embodiments, smaller agglomerates contribute to better filtration material deposits formation. Furthermore, it is believed that if droplets collide but contain only a small amount of liquid (such as only internally), the droplets may not coalesce to a spherical shape. In embodiments, non-spherical agglomerates may provide desirable filtration performance.

**Evaporation to Form Agglomerates 420.** To avoid liquid capillary force impact which may form non-uniform material which may result in high pressure drop penalty, the droplets are dried in an evaporation section of the apparatus, forming dry solid agglomerates, which may be referred to as secondary particles, or "microparticles" which are made up of primary nanoparticles and binder-type material. The liquid vehicle, or solvent, is evaporated and passes through the honeycomb body in a gaseous or vapor phase so that liquid solvent residual or condensation is minimized during material deposition. When the agglomerate is carried into the honeycomb body by gas flow, the residual liquid in the inorganic material should be less than 10 wt%. All liquid is preferably evaporated as a result of the drying and are converted into a gas or vapor phase. The liquid residual could include solvent in the mixture (such as ethanol in the examples), or water condensed from the gas phase. Binder is not considered as liquid residual, even if some or all of the binder may be in liquid or otherwise non-solid state before cure. In one or more embodiments, a total volumetric flow through the chamber is greater than or equal to 5 $Nm^3$/hour and/or less than or equal to 200 $Nm^3$/hour; including greater than or equal to 20 $Nm^3$/hour and/or less than or equal to 100 $Nm^3$/hour; and all values and subranges therebetween. Higher flow rates can deposit more material than lower flow rates. Higher flow rates can be useful as larger cross-sectional area filters are to be produced. Larger cross-sectional area filters may have applications in filter systems for building or outdoor filtration systems.

**Deposition in honeycomb body 425.** The secondary particles or agglomerates of the primary particles are carried in gas flow, and the secondary particles or agglomerates, and/or aggregates thereof, are deposited on inlet wall surfaces of the honeycomb body when the gas passes through the honeycomb body. In one or more embodiments, the agglomerates and/or aggregates thereof are deposited onto the porous walls of the plugged honeycomb body. The deposited agglomerates may be disposed on, or in, or both on and in, the porous walls. In one or more embodiments, the plugged honeycomb body comprises inlet channels which are plugged at a distal end of the honeycomb body, and outlet channels which are plugged at a proximal end of the honeycomb body. In one or more embodiments, the agglomerates and/or aggregates thereof are deposited on, or in, or both on and in, the walls defining the inlet channels.

The flow can be driven by a fan, a blower or a vacuum pump. Additional air can be drawn into the system to achieve a desired flow rate. A desired flow rate is in the range of 5 to 200 $m^3$/hr.

One exemplary honeycomb body is suitable for use as a gasoline particular filter (GPF), and has the following non-limiting characteristics: diameter of 4.055 inches (10.3 cm), length of 5.47 inches (13.9 cm), cells per square inch (CPSI) of 200, wall thickness of 8 mils (203 microns), and average pore size of 14 $\mu$m.

In one or more embodiments, the average diameter of the secondary particles or agglomerates is in a range of from 300 nm micron to 10 microns, 300 nm to 8 microns, 300 nm micron to 7 microns, 300 nm micron to 6 microns, 300 nm micron to 5 microns, 300 nm micron to 4 microns, or 300 nm micron to 3 microns. In specific embodiments, the average diameter of the secondary particles or agglomerates is in the range of 1.5 microns to 3 microns, including about 2 microns. The average diameter of the secondary particles or agglomerates can be measured by a scanning electron microscope.

In one or more embodiments, the average diameter of the secondary particles or agglomerates is in a range of from 300 nm to 10 microns, 300 nm to 8 microns, 300 nm to 7 microns, 300 nm to 6 microns, 300 nm to 5 microns, 300 nm to 4 microns, or 300 nm to 3 microns, including the range of 1.5 microns to 3 microns, and including about 2 microns, and there is a ratio in the average diameter of the secondary particles or agglomerates to the average diameter of the primary particles of in range of from about 2:1 to about 67:1; about 2:1 to about 9:1; about 2:1 to about 8:1; about 2:1 to about 7:1; about 2:1 to about 6:1; about 2:1 to about 5:1; about 3:1 to about 10:1; about 3:1 to about 9:1; about 3:1 to about 8:1; about 3:1 to about 7:1; about 3:1 to about 6:1; about 3:1 to about 5:1; about 4:1 to about 10:1; about 4:1 to about 9:1; about 4:1 to about 8:1; about 4:1 to about 7:1; about 4:1 to about 6:1; about 4:1 to about 5:1; about 5:1 to about 10:1; about 5:1 to about 9:1; about 5:1 to about 8:1; about 5:1 to about 7:1; or about 5:1 to about 6:1, and including about 10:1 to about 20:1.

In one or more embodiments, the depositing of the agglomerates onto the porous walls further comprises passing the gaseous carrier stream through the porous walls of the honeycomb body, wherein the walls of the honeycomb body filter out at least some of the agglomerates by trapping the filtered agglomerates on or in the walls of the honeycomb body. In one or more embodiments, the depositing of the agglomerates onto the porous walls comprises filtering the agglomerates from the gaseous carrier stream with the porous walls of the plugged honeycomb body.

**Post-Treatment 430.** A post-treatment may optionally be used to adhere the agglomerates to the honeycomb body, and/or to each other. That is, in one or more embodiments, at least some of the agglomerates adhere to the porous walls. In one or more embodiments, the post-treatment comprises heating and/or curing the binder when present according to one or more embodiments. In one or more embodiments, the binder material causes the agglomerates to adhere or stick to the walls of the honeycomb body. In one or more embodiments, the binder material tackifies the agglomerates.

Depending on the binder composition, the curing conditions are varied. According to embodiments, a low temperature cure reaction is utilized, for example, at a temperature of $\leq 100°C$. In embodiments, the curing can be completed in the vehicle exhaust gas with a temperature $\leq 950° C$. A calcination treatment is optional, which can be performed at a temperature $\leq 650° C$. Exemplary curing conditions are: a temperature range of from 40 °C to 200 °C for 10 minutes to 48 hours.

In one or more embodiments, the porosity of the material, which may be an inorganic layer, disposed on the walls of the honeycomb body, as measured by mercury intrusion porosimetry, SEM, or X-ray tomography is in a range of from about 20% to about 95%, or from about 25% to about 95%, or from about 30% to about 95%, or from about 40% to about 95%, or from about 45% to about 95%, or from about 50% to about 95%, or from about 55% to about 95%, or from about 60% to about 95%, or from about 65% to about 95%, or from about 70% to about 95%, or from about 75% to about 95%, or from about 80% to about 95%, or from about 85% to about 95%, from about 30% to about 95%, or from about 40% to about 95%, or from about 45% to about 95%, or from about 50% to about 95%, or from about 55% to about 95%, or from about 60% to about 95%, or from about 65% to about 95%, or from about 70% to about 95%, or from about 75% to about 95%, or from about 80% to about 95%, or from about 85% to about 95%, or from about 20% to about 90%, or from about 25% to about 90%, or from about 30% to about 90%, or from about 40% to about 90%, or from about 45% to about 90%, or from about 50% to about 90%, or from about 55% to about 90%, or from about 60% to about 90%, or from about 65% to about 90%, or from about 70% to about 90%, or from about 75% to about 90%, or from about 80% to about 90%, or from about 85% to about 90%, or from about 20% to about 85%, or from about 25% to about 85%, or from about 30% to about 85%, or from about 40% to about 85%, or from about 45% to about 85%, or from about 50% to about 85%, or from about 55% to about 85%, or from about 60% to about 85%, or from about 65% to about 85%, or from about 70% to about 85%, or from about 75% to about 85%, or from about 80% to about 85%, or from about 20% to about 80%, or from about 25% to about 80%, or from about 30% to about 80%, or from about 40% to about 80%, or from about 45% to about 80%, or from about 50% to about 80%, or from about 55% to about 80%, or from about 60% to about 80%, or from about 65% to about 80%, or from about 70% to about 80%, or from about 75% to about 80%,

As mentioned above, the material, which may be an inorganic layer, on walls of the honeycomb body is very thin compared to thickness of the base portion of the walls of the honeycomb body. As will be discussed in further detail below, the material, which may be an inorganic layer, on the honeycomb body can be formed by methods that permit the layer to be applied to surfaces of walls of the honeycomb body in very thin layers. In embodiments, the average thickness of the material, which may be an inorganic layer, on the base portion of the walls of the honeycomb body is greater than or equal to 0.5 $\mu$m and less than or equal to 50 $\mu$m, or greater than or equal to 0.5 $\mu$m and less than or equal to 45 $\mu$m, greater than or equal to 0.5 $\mu$m and less than or equal to 40 $\mu$m, or greater than or equal to 0.5 $\mu$m and less than or equal to 35 $\mu$m, or greater than or equal to 0.5 $\mu$m and less than or equal to 30 $\mu$m, greater than or equal to 0.5 $\mu$m and less than or equal to 25 $\mu$m, or greater than or equal to 0.5 $\mu$m and less than or equal to 20 $\mu$m, or greater than or equal to 0.5 $\mu$m and less than or equal to 15 $\mu$m, greater than or equal to 0.5 $\mu$m and less than or equal to 10 $\mu$m.

As discussed above, the material, which may be an inorganic layer, can be applied to the walls of the honeycomb body by methods that permit the inorganic material, which may be an inorganic layer, to have a small median pore size. This small median pore size allows the material, which may be an inorganic layer, to filter a high percentage of particulate and prevents particulate from penetrating honeycomb and settling into the pores of the honeycomb, as described above with reference to FIG. 4. The small median pore size of material, which may be an inorganic layer, according to embodiments increases the filtration efficiency of the honeycomb body. In one or more embodiments, the material, which may be an inorganic layer, on the walls of the honeycomb body has a median pore size from greater than or equal to 0.1 $\mu$m to less than or equal to 5 $\mu$m, such as from greater than or equal to 0.5 $\mu$m to less than or equal to 4 $\mu$m, or from greater than or equal to 0.6 $\mu$m to less than or equal to 3 $\mu$m. For example, in embodiments, the material, which may be an inorganic layer, on the walls of the honeycomb body may have median pore sizes of about 0.5 $\mu$m, about 0.6 $\mu$m, about 0.7 $\mu$m, about 0.8 $\mu$m, about 0.9 $\mu$m, about 1 $\mu$m, about 2 $\mu$m, about 3 $\mu$m, or about 4 $\mu$m.

Although the material, which may be an inorganic layer, on the walls of the honeycomb body may, in embodiments, cover substantially 100% of the wall surfaces defining inner channels of the honeycomb body, in other embodiments, the material, which may be an inorganic layer, on the walls of the honeycomb body covers less than substantially 100% of the wall surfaces defining inner channels of the honeycomb body. For instance, in one or more embodiments, the material, which may be an inorganic layer, on the walls of the honeycomb body covers at least 70% of the wall surfaces defining inner channels of the honeycomb body, covers at least 75% of the wall surfaces defining inner channels of the honeycomb body, covers at least 80% of the wall surfaces defining inner channels of the honeycomb body, covers at least 85% of the wall surfaces defining inner channels of the honeycomb body, covers at least 90% of the wall surfaces defining inner channels of the honeycomb body, or covers at least 85% of the wall surfaces defining inner channels of the honeycomb body.

As described above with reference to FIGS. 2 and 3, the honeycomb body can have a first end and second end. The first end and the second end are separated by an axial length. In embodiments, the layer on the walls of the honeycomb body may extend the entire axial length of the honeycomb body (*i.e.,* extends along 100% of the axial length). However, in other embodiments, the material, which may be an inorganic layer, on the walls of the honeycomb body extends along at least 60% of the axial length, such as extends along at least 65% of the axial length, extends along at least 70% of the axial length, extends along at least 75% of the axial length, extends along at least 80% of the axial length, extends along at least 85% of the axial length, extends along at least 90% of the axial length, or extends along at least 95% of the axial length.

In embodiments, the material, which may be an inorganic layer, on the walls of the honeycomb body extends from the first end of the honeycomb body to the second end of the honeycomb body. In embodiments, the material, which may be an inorganic layer, on the walls of the honeycomb body extends the entire distance from the first surface of the honeycomb body to the second surface of the honeycomb body (*i.e.,* extends along 100% of a distance from the first surface of the honeycomb body to the second surface of the honeycomb body). However, in one or more embodiments, the layer or material, which may be an inorganic layer, on the walls of the honeycomb body extends along 60% of a distance between the first surface of the honeycomb body and the second surface of the honeycomb body, such as extends along 65% of a distance between the first surface of the honeycomb body and the second surface of the honeycomb body, extends along 70% of a distance between the first surface of the honeycomb body and the second surface of the honeycomb body, extends along 75% of a distance between the first surface of the honeycomb body and the second surface of the honeycomb body, extends along 80% of a distance between the first surface of the honeycomb body and the second surface of the honeycomb body, extends along 85% of a distance between the first surface of the honeycomb body and the second surface of the honeycomb body, extends along 90% of a distance between the first surface of the honeycomb body and the second surface of the honeycomb body, or extends along 95% of a distance between the first surface of the honeycomb body and the second surface of the honeycomb body.

As stated above, and without being bound by any particular theory, it is believed that a low pressure drop is achieved by honeycomb bodies of embodiments because the material, which may be an inorganic layer, on the honeycomb body is a primary filtration component of the honeycomb body, which allows for more flexibility in designing a honeycomb body. The selection of a honeycomb body having a low pressure drop in combination with the low thickness and porosity of the layer on the honeycomb body according to embodiments allows a honeycomb body of embodiments to have a low pressure drop when compared to conventional honeycomb bodies. In embodiments, a loading of the inorganic deposits is between 0.3 to 30 g/L on the honeycomb body, such as between 1 to 30 g/L on the honeycomb body, or between 3 to 30 g/L on the honeycomb body. In other embodiments, the layer is between 1 to 20 g/l on the honeycomb body, such as between 1 to 10 g/l on the honeycomb body. In specific embodiments, the loading of the inorganic material is in a range of from 1 to 9 g/L, 1 to 8 g/L, 1 to 7 g/L, 1 to 8 g/L, 1 to 5 g/L, 1 to 4 g/L, 1 to 3 g/L, 2 to 10 g/L, 2 to 9 g/L, 2 to 8 g/L, 2 to 7 g/L, 2 to 6 g/L, 2 to 5 g/L, 2 to 4 g/L, 3 to 10 g/L, 3 to 9 g/L, 3 to 8 g/L, 3 to 7 g/L, 3 to 6 g/L, 3 to 5 g/L, 4 to 10 g/L, 4 to 9 g/L 4 to 8 g/L, 4 to 7 g/L, or 4 to 6 g/L on the honeycomb body. Loading of the inorganic material is weight of added material in grams divided by the geometric part volume in liters. The geometric part volume is based on outer dimensions of the honeycomb filter body (or plugged honeycomb body). In embodiments, the pressure drop (*i.e.,* a clean pressure drop without soot or ash) across the honeycomb body compared to a honeycomb without a thin porous inorganic material, which may be an inorganic layer, is less than or equal to 20%, such as less than or equal to 9%, or less than or equal to 8%. In other embodiments, the pressure drop across the honeycomb body is less than or equal to 7%, such as less than or equal to 6%. In still other embodiments, the pressure drop across the honeycomb body is less than or equal to 5%, such as less than or equal to 4%, or less than or equal to 3%.

As stated above, and without being bound to any particular theory, small pore sizes in the layer on the walls of the honeycomb body allow the honeycomb body to have good filtration efficiency even before ash or soot build-up occurs in the honeycomb body. The filtration efficiency of honeycomb bodies is measured herein using the protocol outlined in Tandon et al., 65 CHEMICAL ENGINEERING SCIENCE 4751-60 (2010). As used herein, the initial filtration efficiency of a honeycomb body refers to a new or regenerated honeycomb body that does not comprise any measurable soot loading. In embodiments, the initial filtration efficiency (*i.e.,* clean filtration efficiency) of the honeycomb body is greater than or equal to 70%, such as greater than or equal to 80%, or greater than or equal to 85%. In yet other embodiments, the initial filtration efficiency of the honeycomb body is greater than 90%, such as greater than or equal to 93%, or greater than or equal to 95%, or greater than or equal to 98%.

The material, which may be an inorganic layer, on the walls of the honeycomb body according to embodiments is thin and has a porosity, and in embodiments the layer on walls of the honeycomb body also has good chemical durability and physical stability. The chemical durability and physical stability of the material, which may be an inorganic layer, on the honeycomb body can be determined, in embodiments, by subjecting the honeycomb body to test cycles comprising burn out cycles and an aging test and measuring the initial filtration efficiency before and after the test cycles. For instance, one exemplary method for measuring the chemical durability and the physical stability of the honeycomb body comprises measuring the initial filtration efficiency of a honeycomb body; loading soot onto the honeycomb body under simulated operating conditions; burning out the built up soot at about 650 °C; subjecting the honeycomb body to an aging test at 1050 °C and 10% humidity for 12 hours; and measuring the filtration efficiency of the honeycomb body. Multiple soot build up and burnout cycles may be conducted. A small change in filtration efficiency ($\Delta FE$) from before the test cycles to after the test cycles indicates better chemical durability and physical stability of the material, which may be an inorganic layer, on the honeycomb body. In embodiments, the $\Delta FE$ is less than or equal to 5%, such as less than or equal to 4%, or less than or equal to 3%. In other embodiments, the $\Delta FE$ is less than or equal to 2%, or less than or equal to 1%.

In embodiments, the material, which may be an inorganic layer, on the walls of the honeycomb body may be comprised of one or a mixture of ceramic components, such as, for example, ceramic components selected from the group consisting of $SiO_2$, $Al_2O_3$, MgO, $ZrO_2$, CaO, $TiO_2$, $CeO_2$, $Na_2O$, Pt, Pd, Ag, Cu, Fe, Ni, and mixtures thereof. Thus, the material, which may be an inorganic layer, on the walls of the honeycomb body may comprise an oxide ceramic. As discussed in more detail below, the method for forming the material, which may be an inorganic layer, on the honeycomb body according to embodiments can allow for customization of the layer composition for a given application. This may be beneficial because the ceramic components may be combined to match, for example, the physical properties-such as, for example coefficient of thermal expansion (CTE) and Young's modulus, etc.-of the honeycomb body, which can improve the physical stability of the honeycomb body. In embodiments, the material, which may be an inorganic layer, on the walls of the honeycomb body may comprise cordierite, aluminum titanate, enstatite, mullite, forsterite, corundum (SiC), spinel, sapphirine, and periclase.

In embodiments, the composition of the material, which may be an inorganic layer, on the walls of the honeycomb body is the same as the composition of the honeycomb body. However, in other embodiments, the composition of the layer is different from the composition of the honeycomb body.

The properties of the material, which may be an inorganic layer, and, in turn, the honeycomb body overall are attributable to the ability of applying a thin, porous material, which may be an inorganic layer, having small median pore sizes to a honeycomb body.

In embodiments, the method of forming a honeycomb body comprises forming or obtaining an aerosol that comprises a ceramic precursor material and a solvent. The ceramic precursor material of the layer precursor comprises conventional raw ceramic materials that serve as a source of, for example, $SiO_2$, $Al_2O_3$, $TiO_2$, MgO, $ZrO_2$, CaO, $CeO_2$, $Na_2O$, Pt, Pd, Ag, Cu, Fe, Ni, and the like.

In one or more embodiments, the aerosol, which is well-dispersed in a fluid, is directed to a honeycomb body, and the aerosol is deposited on the honeycomb body. In embodiments, the honeycomb body may have one or more of the channels plugged on one end, such as, for example, the first end **105** of the honeycomb body during the deposition of the aerosol to the honeycomb body. The plugged channels may, in embodiments, be removed after deposition of the aerosol. But, in other embodiments, the channels may remain plugged even after deposition of the aerosol. The pattern of plugging channels of the honeycomb body is not limited, and in embodiments all the channels of the honeycomb body may be plugged at one end. In other embodiments, only a portion of the channels of the honeycomb body may be plugged at one end. In such embodiments, the pattern of plugged and unplugged channels at one end of the honeycomb body is not limited and may be, for example, a checkerboard pattern where alternating channels of one end of the honeycomb body are plugged. By plugging all or a portion of the channels at one end of the honeycomb body during deposition of the aerosol, the aerosol may be evenly distributed within the channels 110 of the honeycomb body **100.**

Embodiments of honeycomb bodies and methods for forming the same as disclosed and described herein are now provided.

According to one or more embodiments, binders with high temperature (e.g., greater than 400° C) resistance are included in the inorganic deposits, which may be an inorganic layer, to enhance integrity of the material at high temperatures encountered in automobile exhaust gas emissions treatment systems. In specific embodiments, the inorganic deposits comprise a binder in an amount of about 5 wt%. In one or more embodiments, the binder is an alkoxy-siloxane resin. In one or more embodiments, the binder is an inorganic binder. According to one or more embodiments, other potential inorganic and organic binders such as silicate (e.g. $Na_2SiO_3$), phosphate (e.g. $AlPO_4$, $AlH_2(PO_4)_3$), hydraulic cement(e.g. calcium aluminate), sol (e.g. $mSiO_2 \cdot nH_2O$, $Al(OH)_x \cdot (H_2O)_{6-x}$) and metal alkoxides, could also be utilized in the inorganic deposits to increase mechanical strength by an appropriate curing process.

## EXAMPLES

Embodiments will be further understood by the following non-limiting examples.

Pressure drop (dP) of various plugged honeycomb bodies was measured by a rig, which allows a controlled amount of air flow across a test article. A difference in pressure as measured by an upstream senor as compared to a downstream sensor is the reported pressure drop. In a typical measurement, an article is cleaned with compressed air and loaded in the rig. An air flowrate of 210 SCFM (standard ft$^3$/min) was used, with the standard condition defined at 21.1°C and 1 ATM.

A pressure drop measurement without any soot is called clean dP or clean pressure drop, and is referred to as "dP0". A pressure drop measured with soot is called soot loaded dP or soot loaded pressure drop, and is referred to as "SLdP". To load a test article with soot, the test article is loaded with an amount of soot in a separate apparatus. Artificial soot is deposited into the test article using compressed nitrogen ($N_2$) as a carrier gas. Each apparatus has a designated soot feeder which is connected to a funnel. Once soot is delivered to the funnel by an auger screw, it is pulled into the main exhaust pipe by a venture system. Incremental soot loads are generated in the test article with corresponding weight and pressure drop measured at each level to generate the SLdP profile. The flowrate of nitrogen used to load the soot in the data reported here is 16 ft$^3$/min.

Filtration efficiency (FE) of various plugged honeycomb bodies was measured as follows.

FILTRATION EFFICIENCY (FE) MEASUREMENTS

The filtration efficiency performance (clean and soot-loaded) of the emissions treatment articles herein was evaluated using a filtration efficiency measurement apparatus as shown in FIG. 17.

The setup in FIG. 17 involves generation of soot using a propane burner 735 (Reproducible Exhaust Simulator (REXS burner), Matter Engineering Inc. that is then mixed with primary air 725 before it is introduced to an input pipe 705 to a GPF chamber 710 housing the gasoline particulate filter. The soot generated by the REXS burners is similar to the engine generated soot in terms of soot morphology, chemistry and size distribution. Kasper and Mosimann (2008) (REXS-a reproducible exhaust simulator for the testing of filter materials. SAE Paper No. 2008-01-0759) report REXS generated soot mobility size distribution comparable with engine soot, with mobility mode diameter set at one of: 65/85/110 nm, lognormal geometric standard deviation of 1.8 and primary particle diameter of 20-35 nm. Downstream of the chamber 710 is an exhaust flow chamber 715 that directs flow to an exhaust 720.

The choice for the soot concentration levels and the primary air flow rates are made such that the total gas mass flow rates are similar to ones encountered in typical light duty and heavy duty engine applications. To estimate the mass based filtration efficiency, soot mass concentrations are measured upstream and downstream of the filter using AVL photo-acoustic micro-soot sensor (MSS). Prior to testing, the two micro-soot sensors 730 are calibrated with respect to each other by measuring the upstream soot concentration at different levels of primary gas dilution.

The GPF is cleaned with compressed air and loaded on the measurement bench. The system is set in the bypass 740 mode and the primary air is gradually increased to the desired level. The REXS burner is turned on and the system is allowed to be stabilized while in the bypass mode. Once the system is stabilized, the soot loaded flow is directed to the main pipe where the GPF is loaded. FE measurement begins and continue as soot is loaded into the filter. The soot concentration downstream of the filter, as measured by MSS, is seen to start at a certain value and then gradually decreases to zero, as the deposited soot act as a filtering medium.

The choice for the soot concentration levels and the primary air flow rates are made depending upon the testing requirement. For the data reported here, the combined burner and primary air flowrate used is 365 SLPM (standard liter/min). The flow rate was chosen so that the filter performance obtained is representative of performance on engine. The soot concentration level used is about 7 mg/m$^3$.

The time step for MSS measurements is set at $\delta t=1$ s. Defining the downstream concentration data from MSS as $(t'_k C_{down,k})$; k=1,2,...N), the mass based filtration efficiency at any given time $t'_k$ is calculated as:

$$\text{FE}(t'_k) = 100 \times \left[ 1 - \left( \frac{c_{down,k}}{c_{up}} \right) \right] \qquad (1)$$

where $C_{up}$ is the upstream concentration as measured by the micro-soot sensor The corresponding filter soot loading per unit filter volume, SL, at any time, $t_k$, is estimated using the following relation:

$$\text{SL}(t'_k) = \frac{\sum_{j=1}^{k} Q_T (\text{FE}(t'_j)/100) c_{up} \delta t}{V_{filter}} \qquad (2)$$

where $Q_T$ is the volumetric flow rate to the filter and $V_{filter}$ is the filter volume. As the soot deposits in the filter, the soot itself acts as a filtering medium resulting in the increase of filtration efficiency with time. The filtration efficiency gradually increases from clean filter efficiency to steady state efficiency, reaching 100% efficiency.

EXAMPLES A-D AND EXAMPLES 1-8

A series of emissions treatment articles were prepared and tested for pressure drop (dP) and filtration efficiency (FE). Cordierite honeycomb filters (gasoline particulate filters - GPF) used had the following characteristics: diameter of 4.66 inches (11.8 cm), a length of 6 inches (15.2 cm), cells per square inch (CPSI) of 300, and wall thickness of 8.2 mils.

A summary of the samples, process conditions, dP, and FE is provided in Table 1. Reference to "clean dP" or "clean FE" means there is no soot loaded during the measurement.

Table 1.

| Example # | TWC loading (g/L) | | | Clean FE | Clean dP | Clean FE during soot loading before IP | Soot loading amount (g/L) | Soot loading rate (slpm) | total IP loading (g/L) | Example # | Clean FE" | Clean dP" |
|---|---|---|---|---|---|---|---|---|---|---|---|---|
| | Inlet | Outlet | Total | | | | | | | | | |
| A before IP deposite d | - | - | - | 51.1% | 2.19 | 51.1% | - | - | 7.8 | C after IP deposited, no TWC | 98.2% | 3.11 |
| B before IP deposite d with TWC | 65.30 | 26.96 | 92.26 | 38.4% | 2.42 | 38.4% | - | - | 3.3 | D after IP deposited, with TWC, NO SOOT treatment | 97.1% | 3.09 |
| E before IP deposite d with TWC | 66.04 | 26.83 | 92.87 | 42.0% | 2.41 | 42.0% | 0.1 | 237 | 3.4 | 1 | 99.2% | 2.95 |
| | 65.43 | 28.39 | 93.82 | - | - | 34.4% | 0.1 | 738 | 3.3 | 2 | 98.9% | 2.96 |
| | 65.23 | 27.92 | 93.15 | - | - | 34.3% | 0.3 | 738 | 3.3 | 3 | 97.4% | 2.8 |
| | 66.76 | 27.90 | 94.66 | - | - | 35.4% | 0.6 | 738 | 3.6 | 4 | 95.3% | 2.84 |
| | 65.48 | 27.47 | 92.95 | - | - | 36.6% | 1.0 | 738 | 4.1 | 5 | 95.3% | 2.86 |
| | 65.28 | 26.77 | 92.05 | - | - | 43.7% | 0.3 | 237 | 3.4 | 6 | 96.6% | 2.75 |
| | 66.79 | 26.80 | 93.59 | - | - | 34.8% | 0.3 | 738 | 3.9 | 7 | 98.4% | 2.86 |
| | 66.34 | 26.81 | 93.15 | - | - | 34.9% | 0.6 | 738 | 3.7 | 8 | 91.2% | 2.78 |

Example A was a bare GPF. Example C was the bare GPF of Example A after IP were deposited.

Examples B and E and Examples 1-8 were coated with a simulated three-way conversion (TWC) catalytic material, which did not include any platinum group metals for deposition purposes and pressure drop and filtration testing. A slurry of an alumina, an oxygen storage component (Ce-Zr solid solution), and a boehmite binder was prepared. The slurry was deposited by dip-coating;, relying on capillary action. Thereafter, pores of the article were cleared with vacuum.

Example D was the TWC-coated GPF of Example C after IP were deposited without using any soot treatment.

Examples 1-8 were soot treated according to the parameters in Table 1, inorganic particles (IP) particles were deposited, and the soot was thereafter burned off.

Soot treatment was conducted according to the method and description of FIG. 15. Soot mobility mode diameter was set at 110 nm for these examples, with a lognormal geometric standard deviation of 1.8 and primary particle diameter of 20-35 nm. The combined flow rate (of carrier air and soot) was designed and controlled to be 237 SLPM in some cases, and 738 SLPM in other cases. A filter was first loaded to more than 2 g/L soot load and all data was recorded, such as time, upstream/downstream concentration etc. The data was then processed to provide soot loading duration needed to achieve certain amounts of soot load. Based on this information, subsequent parts were loaded with the specific time duration to achieve the desired soot load. The filters were then removed from the apparatus, and moved to another apparatus for deposition of inorganic materials.

The IP were deposited onto GPFs for Examples C and D, and Examples 1-8 by methods disclosed herein according to FIG. 14.

The IP were: alumina powder ($Al_2O_3$) (primary D50 particle size is 0.7 $\mu$m), which was milled in ethanol to a D50 particle size of about 0.37$\mu$m. The deposition parameters were according to Table 2.

**Table 2.**

| Parameter | Value |
|---|---|
| Alumina solids loading wt.% | 11% |
| Binder | alkoxy-siloxane resin (reactive) |
| Binder concentration wt.% (vs. Alumina) | 15% |
| Suspension flow rate (ml/min) | 10 |
| Atomizing gas flow rate ($Nm^3/h$) | 7.4 |
| Total carrier gas flow ($m^3/h$) | 60 |
| Chamber Gas Temperature (°C) | 150 |

After IP were deposited, the soot was burned off at temperature of 650°C.

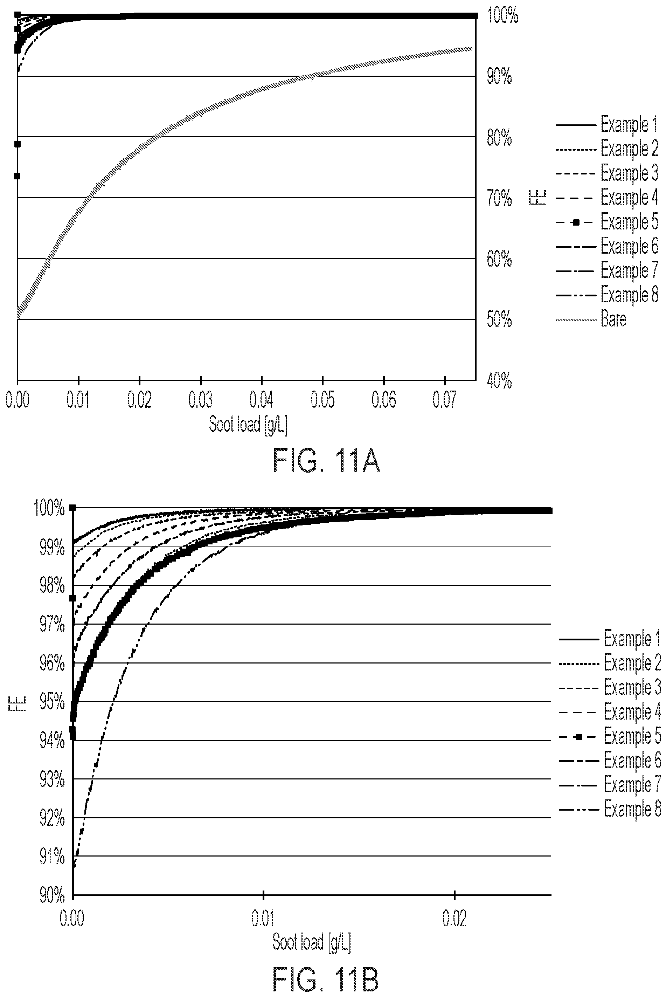

FIG. 11A is a graph of filtration efficiency (FE) versus soot loading for Examples 1-8 and a bare sample (Example A). FIG. 11B is a graph of filtration efficiency (FE) versus soot loading for Examples 1-8 providing a detailed view from 0 to 0.03 g/L relative to FIG. 11A. For Examples 1-8, after IP loading all showed a clean FE > 90%, and reached 100% FE with 0.05 g/L of soot.

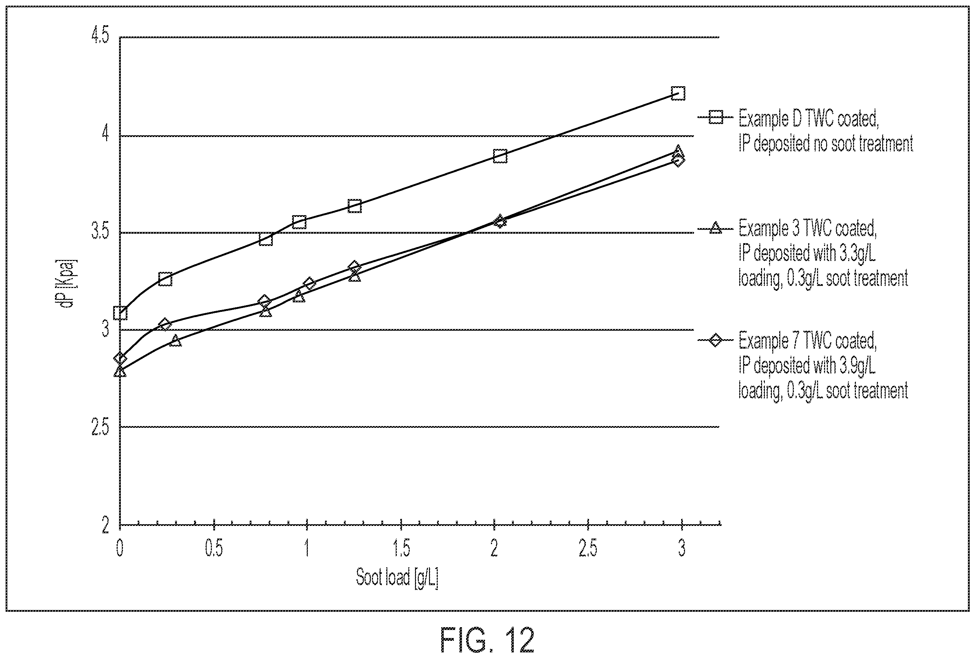

FIG. 12 is a graph of pressure drop (kPa) versus soot loading for varying loadings of inorganic particles and FE for Examples 3 and 6-7. With increased IP loading, both FE and clean dP increased but both are still lower dP than versions where no soot treatment was used.

It was further found that soot loading rate did not result in any measurable difference in pressure drop of the final emissions treatment article.

Table 3 provides a comparison of various dPs to show improvement.

**Table 3.**

| EXAMPLE | Description | dP0 (KPa) | % diff Compared to bare | SLdP @2g/L (KPa) | % diff Compared to bare |
|---|---|---|---|---|---|
| A | Bare | 2.19 | - | 3.01 | - |
| B | TWC coated only | 2.42 | 10% | 4.08 | 35% |
| D | TWC coated and IP deposits without soot treatment | 3.09 | 41% | 3.90 | 30% |

(continued)

| EXAMPLE | Description | dP0 (KPa) | % diff Compared to bare | SLdP @2g/L (KPa) | % diff Compared to bare |
|---------|-------------|-----------|-------------------------|------------------|-------------------------|
| 6 | TWC coated and IP deposits soot treatment (0.3 q/L) | 2.75 | 25% | 3.51 | 17% |
|  | Improvement of 6 using soot treatment compared to D without soot treatment | - | **15%** | - | **13%** |

FIG. 10 is a graph of pressure drop (kPa) versus soot loading as discussed for SLdP for Examples A, B, and E, and Examples 2-5. The improvement in dP of the 0.3 g/L soot treatment as compared to 1 g/L soot treatment was minimal.

EXAMPLE 9

It was further found that utilizing soot treatment would result in a highest penetration depth for the inorganic particles was in a range of greater than or equal to 30 to less than or equal to 70 $\mu$m.

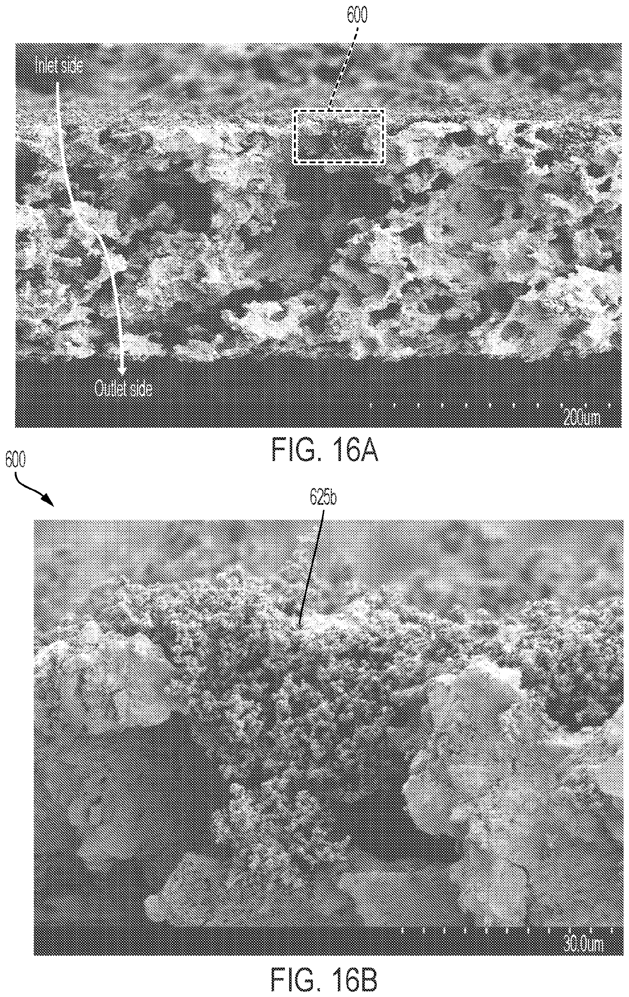

FIGS. 16A and 16B are SEM micrographs of an emissions treatment article at differing magnitudes. The emissions treatment article was prepared by methods disclosed herein at a soot preloading of 0.32 g/L after TWC coating and before IP deposition. The IP loading was 3.8 g/L. The clean filtration efficiency (FE) was 98.2% and the clean pressure drop was 367 Pa. In view of FIG. 16B, the penetration depth was about 30 micrometers. An enlarged view "600" from FIG. 16A shown in FIG. 16B shows bridging inorganic particles 625b covering an opening of an exposed pore.

EXAMPLE 10

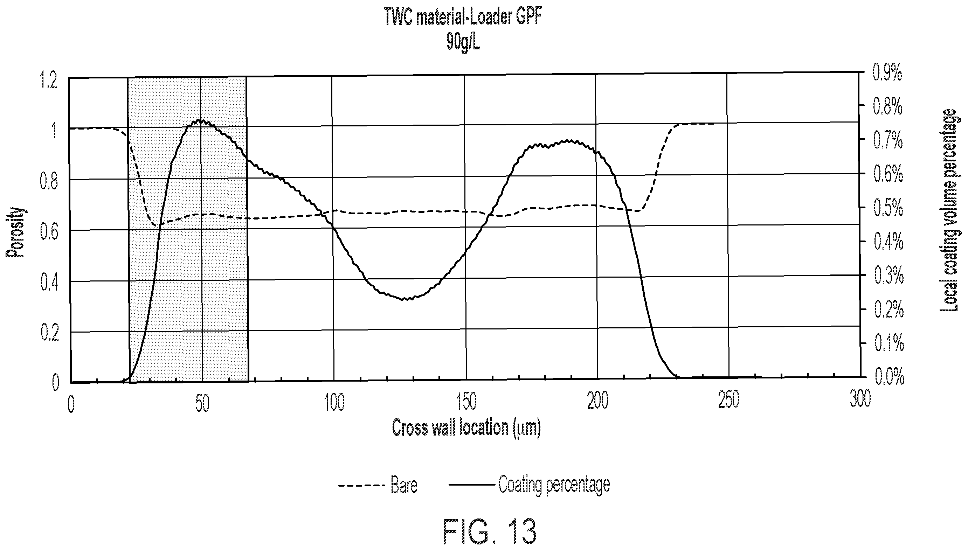

An exemplary three-way conversion (TWC) catalytic material-loaded gasoline particulate filter (GPF) at a loading of 90 g/L (1.47 g/in$^3$), analogous to FIG. 5, was analyzed for a coating distribution using a computed tomography (CT) scan. FIG. 13 is graph of a 3D analysis showing of local coating distribution (%) versus cross wall location (micrometers) for this TWC loaded GPF. In addition, local porosity for a one micron slice (Vv/Vt where Vv is the volume of voids and Vt is a total volume of material in slice) of a bare GPF versus cross wall location (micrometers) is provided for comparison. For the bare GPF, the surface is exposed to air at each thus porosity is 1, and the wall begins around 30 $\mu$m. The bare GPF remains about 65% porosity across the wall. For the coated GPF, % of coating over total amount of coating is shown. For example, at 50 $\mu$m location, about 0.75% of the total coating volume is residing in that 1 $\mu$m width region. A sum of the area under the "coating percentage" curve from 30-70 $\mu$m (highest penetration depth for APT when pretreated with soot), resulted in a percentage of about 24% within that region.
It is understood from EXAMPLE 10, that generally 75% or more by weight of the TWC catalytic material resides at a wall depth of greater than or equal to 30 micrometers, as measured from the inlet side of the channels.

EMBODIMENTS

Various embodiments are listed below. It will be understood that the embodiments listed below may be combined with all aspects and other embodiments in accordance with the scope of the invention.
Embodiment (a) A filtration article comprising: a plugged honeycomb filter body comprising intersecting porous ceramic walls defining a plurality of channels comprised of inlet channels, which are plugged at a distal end of the plugged honeycomb filter body, and outlet channels, which are plugged at a proximal end of the plugged honeycomb filter body, wherein the porous ceramic walls comprise a plurality of pores, wherein some of the pores extend to surfaces of the walls which define the inlet channels; inorganic deposits disposed on surfaces of the walls which define the inlet channels of the plugged honeycomb filter body; and a catalytic material disposed inside the walls of the plugged honeycomb filter body; wherein at least a portion of the inorganic deposits comprise bridging inorganic deposits which at least partially extend over the pores that extend to the surface of the walls, and such bridging inorganic deposits are spaced away from the catalytic material which is disposed within the walls.
Embodiment (b) The filtration article of embodiment (a), wherein the bridging inorganic deposits extend over a majority of the pores that extend to the surface of the walls.
Embodiment (c) The filtration article of any of embodiments (a) to (b), wherein the bridging inorganic deposits extend over all of the pores that extend to the surface of the walls.
Embodiment (d) The filtration article of any of embodiments (a) to (c), wherein some of the inorganic deposits contact the catalytic material which is disposed in the walls.

Embodiment (e) The filtration article of any of embodiments (a) to (d), wherein some of the inorganic deposits penetrate into the walls to a penetration depth of less than 1/10 of an average thickness of the wall.

Embodiment (f) The filtration article of any of embodiments (a) to (e), wherein some of the inorganic deposits penetrate into the walls to a penetration depth of 1/1000 to 1/10 of an average thickness of the wall.

Embodiment (g) The filtration article of any of embodiments (a) to (f), wherein the catalytic material comprises a three-way conversion (TWC) catalytic material.

Embodiment (h) A filtration article comprising: a plugged honeycomb filter body comprising intersecting porous ceramic walls defining a plurality of channels comprised of inlet channels which are plugged at a distal end of the plugged honeycomb filter body and outlet channels which are plugged at a proximal end of the plugged honeycomb filter body, the porous ceramic walls having an average wall thickness, wherein the porous ceramic walls comprise a plurality of pores which comprise exposed pores and remaining pores, wherein the exposed pores extend to surfaces of the walls which define the inlet channels; inorganic deposits disposed on surfaces of the walls which define the inlet channels of the plugged honeycomb filter body, and a catalytic material disposed inside the walls of the plugged honeycomb filter body; wherein at least a portion of the inorganic deposits comprise bridging inorganic deposits which at least partially extend over the exposed pores at the surface of the wall, and such bridging inorganic deposits are spaced away from the catalyst material which is disposed within the walls.

Embodiment (i) The filtration article of embodiment (h), wherein the bridging inorganic deposits extend over a majority of the exposed pores at the surface of the walls.

Embodiment (j) The filtration article of any of embodiments (h) to (i), wherein the bridging inorganic deposits extend over all of the exposed pores at the surface of the walls.

Embodiment (k) The filtration article of any of embodiments (h) to (j), wherein some of the inorganic deposits contact the catalytic material which is disposed in the remaining pores at the surface of the walls.

Embodiment (l) The filtration article of any of embodiments (h) to (k), wherein some of the inorganic deposits penetrate into the walls to a penetration depth of less than 1/10 of the average thickness of the wall.

Embodiment (m) The filtration article of any of embodiments (h) to (l), wherein some of the inorganic deposits penetrate into the walls to a penetration depth of 1/1000 to 1/10 of the average thickness of the wall.

Embodiment (n) The filtration article of any of embodiments (h) to (m), wherein the catalytic material comprises a three-way conversion (TWC) catalytic material.

Embodiment (o) A filtration article comprising: a plugged honeycomb filter body comprising: porous ceramic walls; inlet channels which are plugged at a distal end of the plugged honeycomb filter body; and outlet channels which are plugged at a proximal end of the plugged honeycomb filter body; inorganic deposits disposed on walls defining the inlet channels of the plugged honeycomb filter body; and a three-way conversion (TWC) catalytic material in pores of the porous ceramic walls; wherein at least a portion of the inorganic deposits comprise bridging inorganic deposits which at least partially extend over pores that extend to the surface of the walls, and the bridging inorganic deposits are positioned on the walls to a wall depth of less than or equal to 70 micrometers.

Embodiment (p) The filtration article of embodiment (o), wherein the bridging inorganic deposits are positioned on the walls to a wall depth of less than or equal to 40 micrometers.

Embodiment (q) The filtration article of any of embodiments (o) to (p), wherein the bridging inorganic deposits are spaced away from the TWC catalytic material which is in the pores of the walls.

Embodiment (r) The filtration article of any of embodiments (o) to (q), wherein a loading of the inorganic deposits disposed within the plugged honeycomb filter body is less than or equal to 20 grams of the inorganic deposits per liter of the plugged honeycomb filter body.

Embodiment (s) The filtration article of any of embodiments (o) to (r), wherein a loading of the TWC catalytic material is in a range of 0.5 g/in$^3$ (30 g/L) to 10 g/in$^3$ (600 g/L) of the plugged honeycomb filter body.

Embodiment (t) The filtration article of any of embodiments (o) to (s), wherein 75% or more by weight of the TWC catalytic material resides at a wall depth of greater than or equal to 30 micrometers.

Embodiment (u) The filtration article of any of embodiments (o) to (t), wherein the inorganic deposits comprise a median pore size in a range of greater than or equal to 0.1 micrometers to less than or equal to 5 micrometers.

Embodiment (v) The filtration article of any of embodiments (o) to (u), wherein the porous ceramic walls comprise a porosity of greater than or equal to 40% to less than or equal to 70%.

Embodiment (w) The filtration article of any of embodiments (o) to (v), wherein the inorganic deposits are comprised of refractory inorganic nanoparticles bound by a high temperature binder comprising one or more inorganic components.

Embodiment (x) The filtration article of any of embodiments (o) to (w), wherein the inorganic deposits are comprised of refractory metal oxide nanoparticles.

Embodiment (y) The filtration article of embodiment (x), wherein the nanoparticles comprise alumina.

Embodiment (z) The filtration article of any of embodiments (o) to (y), wherein the inorganic deposits are comprised of nanoparticles present in the form of agglomerates.

Embodiment (aa) A filtration article comprising: a plugged honeycomb filter body comprising: porous ceramic walls; inlet channels which are plugged at a distal end of the plugged honeycomb filter body; and outlet channels which are plugged at a proximal end of the plugged honeycomb filter body; inorganic deposits disposed on walls defining the inlet channels of the plugged honeycomb filter body at a loading of less than or equal to 20 grams of the inorganic deposits per liter of the plugged honeycomb filter body; and a three-way conversion (TWC) catalytic material in pores of the porous ceramic walls and disposed separate from the inorganic deposits; wherein at least a portion of the inorganic deposits comprise bridging inorganic deposits which at least partially extend over the pores that extend to the surface of the walls, and a clean filtration efficiency of the filtration article is greater than or equal to 90% as measured by a clean filtration efficiency test.

Embodiment (bb) The filtration article of embodiment (aa), wherein the bridging inorganic deposits are positioned on the walls to a wall depth of less than or equal to 70 micrometers, and 75% or more by weight of the TWC catalytic material resides at a wall depth of greater than or equal to 30 micrometers.

Embodiment (cc) The filtration article of any of embodiments (aa) to (bb), wherein a loading of the TWC catalytic material is in a range of 0.5 to g/in$^3$ (30 g/L) 10 g/in$^3$ (600 g/L) of the plugged honeycomb filter body.

Embodiment (dd) The filtration article of any of embodiments (aa) to (cc), wherein a loading of the inorganic deposits disposed within the plugged honeycomb filter body is less than or equal to 20 grams of the inorganic deposits per liter of the plugged honeycomb filter body.

Embodiment (ee) The filtration article of any of embodiments (aa) to (dd), wherein the inorganic deposits comprise a median pore size in a range of greater than or equal to 0.1 micrometers to less than or equal to 5 micrometers.

Embodiment (ff) The filtration article of any of embodiments (aa) to (ee), wherein the porous ceramic walls comprise a porosity of greater than or equal to 40% to less than or equal to 70%.

Embodiment (gg) The filtration article of any of embodiments (aa) to (ff), wherein the inorganic deposits are comprised of refractory inorganic nanoparticles bound by a high temperature binder comprising one or more inorganic components.

Embodiment (hh) The filtration article of any of embodiments (aa) to (gg), wherein the inorganic deposits are comprised of refractory metal oxide nanoparticles.

Embodiment (ii) The filtration article of embodiment (hh), wherein the nanoparticles comprise alumina.

Embodiment (jj) The filtration article of any of embodiments (aa) to (ii), wherein the inorganic deposits are comprised of nanoparticles present in the form of agglomerates.

Embodiment (kk) A method for making a filtration article, the method comprising: coating a catalytic material within pores of porous ceramic walls of a plugged honeycomb filter body; thereafter depositing a filler material within the plugged honeycomb filter body; exposing the plugged honeycomb filter body to a surface treatment to deposit inorganic deposits within the plugged honeycomb filter body on one or more portions of the porous ceramic walls; and burning off the filler material.

Embodiment (ll) The method of clam (kk), wherein at least a portion of the inorganic deposits comprise bridging inorganic deposits which at least partially extend over the pores that extend to the surface of the walls, and such bridging inorganic deposits are spaced away from the catalytic material which is disposed within the walls.

Embodiment (mm) The method of any of embodiments (kk) to (ll), wherein at least a portion of the inorganic deposits comprise bridging inorganic deposits which at least partially extend over exposed pores at the surface of the wall, and such bridging inorganic deposits are spaced away from the catalyst material which is disposed within the walls.

Embodiment (nn) The method of any of embodiments (kk) to (mm), wherein the surface treatment comprises: atomizing particles of an inorganic material into liquid-particulate-binder droplets comprised of a liquid vehicle, a binder material, and the particles; evaporating substantially all of the liquid vehicle from the droplets to form agglomerates comprised of the particles and the binder material; and depositing the agglomerates onto the porous ceramic walls.

Embodiment (oo) The method of any of embodiments (kk) to (nn), wherein coating the catalytic material comprises: preparing a slurry of a platinum group metal (PGM), alumina, and an oxygen storage component; and applying the slurry within the plugged honeycomb filter body.

Embodiment (pp) The method of any of embodiments (kk) to (oo) comprising depositing the filler material within the plugged honeycomb filter body at a loading in a range of greater than or equal to 0.1 g/L to less than or equal to 0.3 g/L of the plugged honeycomb filter body.

Embodiment (qq) The method of any of embodiments (kk) to (pp) comprising burning off the filler material at a temperature in a range of greater than or equal to 600°C to less than or equal to 1200°C.

Embodiment (rr) The method of any of embodiments (kk) to (qq), wherein the filler material is an organic material, natural or synthetic, selected from the group consisting of: soot, starch, and polymer powders.

Embodiment (ss) The method of any of embodiments (kk) to (rr), wherein the catalytic material comprises a three-way conversion (TWC) catalytic material.

Embodiment (ss) The method of any of embodiments (a) to (ss), wherein the catalytic material comprises: a platinum group metal (PGM), alumina, and an oxygen storage component.

Embodiment (tt) The method of any of embodiments (a) to (ss), wherein the catalytic material comprises: a copper, a nickel or an iron promoted molecular sieve.

It will be apparent to those skilled in the art that various modifications and variations can be made to the embodiments described herein without departing from the spirit and scope of the claimed subject matter. Thus, it is intended that the specification cover the modifications and variations of the various embodiments described herein provided such modification and variations come within the scope of the appended claims and their equivalents.

**Claims**

1. A filtration article comprising:
   a plugged honeycomb filter body comprising:

   porous ceramic walls;
   inlet channels plugged at a distal end of the plugged honeycomb filter body;
   outlet channels plugged at a proximal end of the plugged honeycomb filter body;
   inorganic deposits disposed on walls defining the inlet channels of the plugged honeycomb filter body at a loading of less than or equal to 20 grams of the inorganic deposits per liter of the plugged honeycomb filter body;
   a catalytic material in pores of the porous ceramic walls and disposed separate from the inorganic deposits; and
   wherein at least a portion of the inorganic deposits comprise bridging inorganic deposits extending at least partially over the pores that extend to the surface of the porous ceramic walls, and a clean filtration efficiency of the filtration article is greater than or equal to 90% as measured by a clean filtration efficiency test.

2. The filtration article of claim 1, wherein the bridging inorganic deposits are positioned on the porous ceramic walls to a wall depth of less than or equal to 70 micrometers.

3. The filtration article of any one of claims 1-2, wherein 75% or more by weight of the catalytic material resides at a wall depth of greater than or equal to 30 micrometers.

4. The filtration article of any one of claims 1-3, wherein the catalytic material is a three-way conversion catalytic material.

5. The filtration article of any one of claims 1-4, wherein a loading of the catalytic material is in a range from 0.5 g/in3 (30 g/L) to 10 g/in3 (600 g/L) of the plugged honeycomb filter body.

6. The filtration article of any one of claims 1-5, wherein a loading of the inorganic deposits disposed within the plugged honeycomb filter body is less than or equal to 20 grams of the inorganic deposits per liter of the plugged honeycomb filter body.

7. The filtration article of any one of claims 1-6, wherein the inorganic deposits comprise a median pore size greater than or equal to 0.1 micrometers to less than or equal to 5 micrometers.

8. The filtration article of any one of claims 1-7, wherein the porous ceramic walls comprise a porosity greater than or equal to 40% and less than or equal to 70%.

9. The filtration article of any one of claims 1-8, wherein the inorganic deposits comprise refractory inorganic nanoparticles bound by a high temperature binder comprising one or more inorganic components.

10. The filtration article of any one of claims 1-9, wherein the inorganic deposits comprise refractory metal oxide nanoparticles.

11. The filtration article of claim 10, wherein the refractory metal oxide nanoparticles comprise alumina.

12. The filtration article of any one of claims 1-11, wherein the inorganic deposits comprise nanoparticles present in the form of agglomerates.

FIG. 1

FIG. 2

FIG. 3

FIG. 4

FIG. 5
PRIOR ART

FIG. 6

FIG. 7

FIG. 8

FIG. 9

FIG. 10

FIG. 11A

FIG. 11B

FIG. 12

FIG. 13

_400_

```
┌─────────────────────────────────┐
│       Mixture Preparation       │———405
└─────────────────────────────────┘
                 │
                 ▼
┌─────────────────────────────────┐
│     Atomizing to form droplets   │———410
└─────────────────────────────────┘
                 │
                 ▼
┌─────────────────────────────────┐
│      Intermixing droplets and    │———415
│      gaseous carrier stream      │
└─────────────────────────────────┘
                 │
                 ▼
┌─────────────────────────────────┐
│        Evaporation to form       │———420
│          agglomerates            │
└─────────────────────────────────┘
                 │
                 ▼
┌─────────────────────────────────┐
│       Material Deposition        │———425
└─────────────────────────────────┘
                 │
                 ▼
┌─────────────────────────────────┐
│         Post-Treatment           │———430
└─────────────────────────────────┘
```

FIG. 14

450

Coating a TWC catalytic material within a plugged honeycomb body — 452

Depositing a sacrificial filler/barrier within the plugged honeycomb filter body — 454

Depositing particles of an inorganic material on porous ceramic walls of the plugged honeycomb body — 456

Removing the sacrificial filler/barrier — 458

FIG. 15

FIG. 16A

FIG. 16B

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63282815

**Non-patent literature cited in the description**

- **TANDON et al.** *CHEMICAL ENGINEERING SCIENCE*, 2010, vol. 65, 4751-60

- **KASPER** ; **MOSIMANN**. REXS-a reproducible exhaust simulator for the testing of filter materials. *SAE Paper No. 2008-01-0759*, 2008